(19) **Europäisches Patentamt**
**European Patent Office**
**Office européen des brevets**

(11) **EP 2 381 287 A1**

(12) **EUROPÄISCHE PATENTANMELDUNG**

(43) Veröffentlichungstag:
26.10.2011 Patentblatt 2011/43

(51) Int Cl.:
*G02B 21/36* (2006.01)  *G01N 1/31* (2006.01)
*G02B 21/24* (2006.01)  *G02B 21/00* (2006.01)

(21) Anmeldenummer: 11173796.1

(22) Anmeldetag: 09.08.2007

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **06.09.2006 DE 102006042242**

(62) Dokumentnummer(n) der früheren Anmeldung(en) nach Art. 76 EPÜ:
**07788340.3 / 2 064 578**

(71) Anmelder: **Leica Microsystems CMS GmbH 35578 Wetzlar (DE)**

(72) Erfinder: **Sieckmann, Frank 44879 Bochum (DE)**

(74) Vertreter: **Schaumburg, Thoenes, Thurn, Landskron, Eckert Patentanwälte Postfach 86 07 48 81634 München (DE)**

Bemerkungen:
Diese Anmeldung ist am 13-07-2011 als Teilanmeldung zu der unter INID-Code 62 erwähnten Anmeldung eingereicht worden.

(54) **Verfahren zur Untersuchung eines Objekts mit einem Mikroskop und ein Mikroskop**

(57) Ein Verfahren zur Untersuchung eines Objekts mit einem Mikroskop, insbesondere einem konfokalen Scanmikroskop, weist die folgenden Schritte auf. Zunächst erfolgt ein Auswählen eines ein zu untersuchendes Objekt oder mehrere zu untersuchende Objekte enthaltenden Scanbereichs in einer vorgebbaren Raumrichtung. Dann erfolgt ein Aufnehmen einer Serie von Bildern in dem Scanbereich entlang der Raumrichtung, so dass die einzelnen Bilder einzelnen Ebenen in der Raumrichtung eineindeutig zuordenbar sind. Dann erfolgt ein Auswählen eines Bildanalyseverfahrens mit mindestens einem vorgebbaren Kriterium hinsichtlich des zu untersuchenden Objekts oder der zu untersuchenden Objekte. Schließlich erfolgt ein Anwenden des Bildanalyseverfahrens auf die einzelnen Ebenen zur Ermittlung einer das oder die vorgebbaren Kriterien zumindest weitgehend erfüllenden bevorzugten Ebene. Des Weiteren ist ein Mikroskop zur Durchführung des Verfahrens angegeben.

Fig. 1

EP 2 381 287 A1

**Beschreibung**

Die vorliegende Erfindung betrifft ein Verfahren zur Untersuchung eines Objekts mit einem Mikroskop, insbesondere einem konfokalen Scanmikroskop, sowie ein Mikroskop zur Durchführung des Verfahrens.

Verfahren zur Untersuchung eines Objekts mit einem Mikroskop und entsprechende Mikroskope sind aus der Praxis bekannt und existieren in den unterschiedlichsten Ausführungsformen. Dabei werden bspw. konfokale Laserscanning-Mikroskope verwendet, die im Bereich der Fluoreszenzmikroskopie eingesetzt werden können.

Bei bekannten Mikroskopieranwendungen im Bereich der Biologie werden häufig Langzeitbeobachtungen einer lebenden Zelle durchgeführt, wobei ein definiertes, die lebende Zelle enthaltendes Raumvolumen häufig abgescannt wird. Der Scanvorgang wird nicht selten 10.000 mal und häufiger wiederholt. Dabei fallen sehr große abzuspeichernde Datenmengen an, und die Messdauer beträgt nicht selten Tage. Die abzuspeichernden Datenmengen liegen häufig im TByte-Bereich, woraus sich ein enormer Datenverwaltungs- und Datenverarbeitungsaufwand ergibt.

Der vorliegenden Erfindung liegt daher die Aufgabe zugrunde, ein Verfahren sowie ein Mikroskop der eingangs genannten Art anzugeben, wonach eine besonders schnelle Objektuntersuchung mit möglichst kleinem Datenvolumen erreicht ist.

Erfindungsgemäß wird die voranstehende Aufgabe durch ein Verfahren mit den Merkmalen des Patentanspruchs 1 gelöst. Danach erfolgt zunächst ein Auswählen eines ein zu untersuchendes Objekt oder mehrere zu untersuchende Objekte enthaltenden Scanbereichs in einer vorgebbaren Raumrichtung. Dabei ist sicherzustellen, dass der ausgewählte Scanbereich das oder die zu untersuchenden Objekte enthält. Im nächsten Schritt erfolgt ein Aufnehmen einer Serie von Bildern in dem Scanbereich entlang der Raumrichtung, so dass die einzelnen Bilder einzelnen Ebenen in der Raumrichtung eineindeutig zuordenbar sind. Anschließend erfolgt ein Auswählen eines Bildanalyseverfahrens mit mindestens einem vorgebbaren Kriterium hinsichtlich des zu untersuchenden Objekts oder der zu untersuchenden Objekte und schließlich erfolgt ein Anwenden des Bildanalyseverfahrens auf die einzelnen Ebenen zur Ermittlung einer das oder die vorgebbaren Kriterien zumindest weitgehend erfüllenden bevorzugten Ebene.

In erfindungsgemäßer Weise ist erkannt worden, dass durch die Anwendung eines geeigneten Bildanalyseverfahrens eine sichere Bestimmung mindestens einer bevorzugten Scanebene möglich ist, die bspw. möglichst viele Objektinformationen enthält. Ausgehend von dieser bevorzugten Ebene ist der sich in der Raumrichtung erstreckende ursprünglich ausgewählte Scanbereich eingrenzbar. Meist kann eine große Anzahl von ursprünglich im Scanbereich enthaltenen Ebenen hierdurch ausgesondert und bei einem Wiederholen des Scannens in der Raumrichtung außer Acht gelassen werden. Dies spart insbesondere bei Langzeitmessungen erheblich Zeit, wobei darüber hinaus wesentlich geringere Datenmengen verarbeitet, bspw. gespeichert und analysiert werden müssen.

Mit dem erfindungsgemäßen Verfahren erfolgt somit quasi die Bestimmung einer bevorzugten Fokusebene und somit einer Art Fokussierung auf ein zu untersuchendes Objekt.

Folglich ist mit dem erfindungsgemäßen Verfahren zur Untersuchung eines Objekts ein Verfahren angegeben, wonach eine besonders schnelle Objektuntersuchung mit möglichst kleinem Datenvolumen erreicht ist.

Im Hinblick auf eine besonders effiziente Eingrenzung des zu verarbeitenden Datenvolumens könnte das Bildanalyseverfahren oder ein anderes Bildanalyseverfahren zur Bestimmung von Grenzebenen in der Raumrichtung angewendet werden, so dass für mindestens ein Objekt ein durch die Grenzebenen eingegrenzter Scanbereich mit Objektinformation enthaltenden Ebenen in der Raumrichtung definierbar ist, der somit das jeweilige Objekt vollständig enthält, aber keine Ebenen ohne Objektinformation aufweist. Neben der Bestimmung einer bevorzugten Ebene können somit auch Grenzebenen definiert werden, die noch Objektinformation enthalten, wobei an diese Grenzebenen angrenzende Ebenen keine Objektinformation mehr aufweisen. Somit kann ein Stapel oder Stack aus Ebenen bestimmt werden, der zur vollständigen Untersuchung des betrachteten Objekts ausreicht. Weitere ursprünglich ausgewählte Ebenen müssen nicht analysiert werden. Es kann vorkommen, dass innerhalb eines ausgewählten Scanbereichs mehr als ein zu untersuchendes Objekt vorliegt. In diesem Fall können mehrere bevorzugte Ebenen ermittelt werden, die den einzelnen Objekten zuordenbar sind. In gleicher Weise können dann auch unterschiedliche, den jeweiligen Objekten zugeordnete eingegrenzte Scanbereiche bestimmt werden. Mit anderen Worten kann jedes zu untersuchende Objekt einem unterschiedlichen eingegrenzten Scanbereich zugeordnet werden. In einem ursprünglichen Scanbereich könnten daher mehrere unterschiedliche eingegrenzte Scanbereiche definiert sein.

Üblicherweise ist bei einem herkömmlichen Mikroskop die Raumrichtung die Z-Richtung, d.h. die Richtung, in der das zu untersuchende Objekt von einem Nutzer üblicherweise betrachtet wird.

In besonders vorteilhafter Weise könnte das Verfahren in einer weiteren oder gar entlang aller Raumrichtungen durchgeführt werden, um im letztgenannten Fall mindestens ein aus eingegrenzten Scanbereichen der jeweiligen Raumrichtungen gebildetes eingegrenztes, das jeweilige Objekt vollständig enthaltendes Scanvolumen zu definieren. Ein derartiges Scanvolumen könnte das zu untersuchende Objekt so eng wie möglich umschließen, wobei sämtliche im Scanvolumen enthaltenen Ebenen Objektinformation aufweisen und jede außerhalb des Scanvolumens liegende Ebene keine Objektinformation mehr enthält. Hierdurch ist eine besonders effiziente Datenverarbeitung ermöglicht.

Bei der Auswahl eines Bildanalyseverfahrens zur Bestimmung einer bevorzugten Ebene liegt eine Anlehnung an die bislang übliche Arbeitsweise eines Anwenders in der konfokalen Mikroskopie zugrunde. Bei dieser üblichen Arbeitsweise werden meist Erfahrung und Wissen eingesetzt, um eine bestimmte Ebene einzustellen. Dabei spielt Kontrast keine oder nur eine geringe Rolle und es wird weit häufiger nach ganz bestimmten Merkmalen oder Merkmalskombinationen im Bild gesucht. Folglich könnte das mindestens eine Kriterium des Bildanalyseverfahrens die Geometrie, die Form, die Farbe, die Struktur, eine Kolokalisation, eine Umgebung, ein Zeitverhalten oder eine Anzahl an Objekten oder Kombinationen hiervon umfassen. Das Kriterium hinsichtlich der Geometrie könnte sich an Flächen, Umfängen und Rundheiten orientieren. Die Form könnte sich auf eine Suche nach bspw. ovalen Formen, glatten Rändern, unregelmäßig geformten Rändern und Löchern richten. Das Struktur-Kriterium könnte hinsichtlich Unterschieden in Streifenmustern, Texturierungen und Porösitäten verwendet werden. Das Kriterium der Kolokalisation könnte bspw. darauf hinweisen, dass eine vorgegebene Anzahl von kleinen Objekten in jedem großen Objekt vorhanden sein muss, um eine Auswahl mittels der Bildanalyse zur Folge zu haben. Das Kriterium der Umgebung bezieht sich darauf, dass bspw. jedes große Objekt von einer bestimmten Anzahl von kleinen Objekten umgeben sein muss. Auch ein Zeitverhalten kann als Kriterium bei der Bildanalyse dienen, da die Größe oder Form eines Objekts, bspw. bei lebenden Zellen, zeitabhängig sein kann. Das Kriterium hinsichtlich der Anzahl an Objekten kann dahingehend genutzt werden, dass das Bildanalyseverfahren dann detektieren könnte, wenn eine bestimmte vorgegebene Anzahl von Objekten in dem zu untersuchenden Bild bzw. in der zu untersuchenden Ebene vorliegt. Alle Kriterien können in beliebigen Kombinationen Anwendung finden.

Das jeweilige Bildanalyseverfahren könnte vom Anwender in Abhängigkeit individueller Erfordernisse ausgewählt werden. Eine derartige Auswahl des Bildanalyseverfahrens könnte auch nach vorgebbaren Kriterien automatisch erfolgen.

In besonders vorteilhafter Weise könnte das Verfahren während der Objektuntersuchung durchgeführt werden. Mit anderen Worten könnte ein übliches Scannen eines Scanvolumens, in dem das Objekt oder die Objekte auf jeden Fall vorliegen, durchgeführt werden, wobei aufgenommene Daten abgespeichert und hinsichtlich der Lokalisierung gewünschter Objekte in erfindungsgemäßer Weise analysiert werden. Bei einer nachfolgenden Wiederholung des Scanvorgangs könnte dann bereits eine Eingrenzung des Scanbereichs und/oder Scanvolumens erfolgen, um die Aufnahme und Verwaltung von Datenmengen einzusparen, die keine Objektinformation enthalten. Dies ist besonders vorteilhaft, wenn viele Scanwiederholungen bei Langzeituntersuchungen erforderlich sind. Das Untersuchungsverfahren ist damit quasi lernfähig und kann Untersuchungszeiten erheblich verringern. Durch die zeitgleiche Anwendung des erfindungsgemäßen Verfahrens während der für die Untersuchung erforderlichen Scanvorgänge erfordert das erfindungsgemäße Verfahren in keinem Fall zu einer üblichen Objektuntersuchung zusätzliche Zeit.

In weiter vorteilhafter Weise könnte mittels des erfindungsgemäßen Verfahrens bei einer Untersuchung eines flächigen Probenbereichs eine Karte aus Ortskoordinaten bevorzugter Ebenen erzeugt werden. An einer derartigen Karte können sich Scanwiederholungen orientieren, um Untersuchungszeit und Datenmengen einzusparen. Bei einer derartigen Erzeugung einer Karte aus Ortskoordinaten bevorzugter Ebenen könnte die Auswahl eines ein zu untersuchendes Objekt oder mehrere zu untersuchende Objekte enthaltenden Scanbereichs in einer vorgebbaren Raumrichtung beim Fortschreiten von einer ersten Ortskoordinate zu einer zweiten Ortskoordinate die Position der bevorzugten Ebene bei der ersten Ortskoordinate berücksichtigen. Dabei liegt die Überlegung zugrunde, dass sich eine zweite Ortskoordinate einer benachbarten bevorzugten Ebene nicht wesentlich von einer ersten Ortskoordinate einer ersten bevorzugten Ebene unterscheiden wird, wenn eine im Wesentlichen gleichmäßige Anordnung von Objekten vorliegt. Es erfolgt somit ein sukzessiver Aufbau einer Karte, ohne dass bei der Erzeugung einer benachbarten Ortskoordinate ein umfangreicher Scan entlang einer Raumrichtung erfolgen muss. Eine Einschränkung des Scanbereichs der zweiten Ortskoordinate ist unter Berücksichtigung der Daten der ersten Ortskoordinate möglich. Dabei könnte der ausgewählte Scanbereich für die zweite Ortskoordinate die bevorzugte Ebene des Scanbereichs bei der ersten Ortskoordinate aufweisen.

Der erste Verfahrensschritt des erfindungsgemäßen Verfahrens besteht in der Auswahl eines Scanbereichs, der ein zu untersuchendes Objekt oder mehrere zu untersuchende Objekte enthält. Diese erste Auswahl erfolgt üblicherweise mittels einer Schätzung. Um diese Schätzung möglichst effizient durchzuführen, könnte die Auswahl eines ein zu untersuchendes Objekt oder mehrere zu untersuchende Objekte enthaltenden Scanbereichs in einer vorgebbaren Raumrichtung unter Berücksichtigung der Oberflächenform und/oder -struktur eines Objektträgers erfolgen. Dabei liegt die Überlegung zugrunde, dass ein auf einem Objektträger angeordnetes zu untersuchendes Objekt üblicherweise und zwangsläufig sehr nahe an der Oberfläche des Objektträgers positioniert ist. Bei Bekanntheit der Position der Oberfläche kann davon ausgegangen werden, dass sich das Objekt zumindest nicht sehr weit von dieser Position entfernt befindet. Insoweit kann die Schätzung des Scanbereichs auf die bekannte Oberflächenposition abgestimmt werden. Man könnte hierbei einen Scanbereich wählen, der die Position der Oberfläche des Objektträgers aufweist und von dieser Position aus um eine vorgebbare Entfernung in die Plusrichtung und die Minusrichtung der Raumrichtung abweicht. Damit besteht eine hohe Wahrscheinlichkeit, dass sich das Objekt innerhalb des geschätzten Scanbereichs befindet. Es ist daher besonders vorteilhaft, die Oberflächenform und/oder -struktur eines Objektträgers genau zu kennen, um eingegrenzte Scanbereiche und Scanvolumina entlang vorzugsweise flächiger Untersuchungsbereiche auf dem Objektträger automatisch bestimmen zu können. Der gesamte sukzessive Aufbau einer Karte aus Ortskoordinaten bevorzugter Ebenen und/oder eingegrenzter Scanbereiche und/oder Scanvolumina wird durch die Berücksichtigung der Oberflächenform und/oder -struktur eines Objektträgers begünstigt. Durch diese Berücksichtigung des Objektträgers können insbesondere "Positions-Ausreißer" beim Fortschreiten von einer Ortskoordinate zur nächsten Ortskoordinate weitestgehend vermieden werden, da immer ein Vergleich mit der Position und den Ortskoordinaten der Oberfläche des Objektträgers ermöglicht ist. Bei einer zu großen Abweichung der jeweiligen Ortskoordinaten kann eine Glättung auf der Basis der Ortskoordinaten der Oberfläche des Objektträgers erfolgen.

Hinsichtlich der Darstellung der Oberflächenform und/oder -struktur eines Objektträgers können in vorteilhafter Weise unterschiedliche Methoden und Analysetechniken zur Anwendung kommen. In einem einfachen Fall könnte die Oberfläche des Objektträgers als Ebene angenommen werden und ausgehend von drei bekannten Punkten auf dem Objektträger berechnet werden. Diese Technik ist für den Fall eines dicken Objektträgers meist ausreichend, da sich ein derartiger Objektträger bei seiner Anwendung aufgrund seiner Dicke meist nur sehr wenig oder gar nicht verformt. Allenfalls eine zu bspw. der Z-Richtung schiefe Anordnung des Objektträgers könnte vorliegen. Jedoch ändert diese schiefe Anordnung nichts an der weitestgehend ebenen Oberflächenform.

Bei dünnen Objektträgern können jedoch häufig Welligkeiten nach ihrem Einbau in ein Mikroskop auftreten. In diesem Fall reicht die Annäherung der Oberfläche des Objektträgers als Ebene nicht mehr aus. Daher könnte die Oberfläche des Objektträgers ausgehend von mindestens vier bekannten Punkten triangularisiert werden. Bei weiter verfeinerten Analysetechniken könnte die Oberfläche des Objektträgers durch n-Ecke oder Vielecke angenähert werden. In einem weiter optimierten Verfahren könnte die Oberfläche des Objektträgers ausgehend von n bekannten Punkten durch einen Polynom-Fit angenähert werden. Bei der Auswahl der Analysetechnik der Oberfläche ist somit auf die jeweiligen individuellen Gegebenheiten und Ausgestaltungen eines Objektträgers abzustellen.

Die Annäherung an die Oberflächenform und/oder -struktur des Objektträgers könnte auf der Basis manuell bestimmter Punkte erfolgen. Hierzu könnten einzelne Punkte durch den Anwender manuell vermessen werden. Bei einer alternativen Ausgestaltung des Verfahrens könnten die bekannten Punkte auch automatisch vom Mikroskop ermittelt werden. Bei einer weiteren Ausgestaltung könnten die bekannten Punkte ausgehend von den Koordinaten bereits ermittelter bevorzugter Ebenen bestimmt werden.

Bei einer weiteren Darstellung der Oberfläche des Objektträgers könnte die Oberfläche des Objektträgers in mehrere Scanfelder aufgeteilt werden und könnte nach Bestimmung der Position eines ersten Scanfelds bei der Bestimmung der Position eines benachbarten Scanfelds die Position des ersten Scanfelds berücksichtigt werden. Es könnte hierdurch ein sukzessives Bestimmen der Oberfläche des Objektträgers durchgeführt werden.

Bei einer weiter vorteilhaften Ausgestaltung des Verfahrens könnte auf den Objektträger auf eine seiner Oberflächen oder in das Innere des Objektträgers ein regelmäßiges oder unregelmäßiges Muster auf- oder eingebracht werden. Ein derartiges Muster erleichtert die Darstellung und Bestimmung der Oberfläche oder der Form und Struktur des Objektträgers erheblich. Letztendlich kann dabei von bekannten Anordnungen von Mustern auf dem Objektträger oder in dem Objektträger ausgegangen werden.

Bei einer konkreten Ausgestaltung könnte das Muster schwarz-weiß oder farbig sein und/oder fluoreszierende Punkte oder Bereiche aufweisen. In jedem Fall ist sicherzustellen, dass das Muster vom Mikroskop sicher detektiert werden kann.

Im Falle von fluoreszierenden Punkten oder Bereichen könnten die fluoreszierenden Punkte oder Bereiche auf eine vorgebbare Wellenlänge reagieren. Dies ermöglicht ein optisches Trennen der fluoreszierenden Punkte oder Bereiche von einem fluoreszierenden zu untersuchenden Objekt.

In vorteilhafter Weise könnte das Muster zur Berechnung, Triangularisierung oder Annäherung der Oberfläche des Objektträgers verwendet werden.

Bei einer konkreten Anwendung könnte das Muster auf einen im Wesentlichen ebenen Objektträger aufgebracht werden. Alternativ hierzu könnte das Muster auf eine Mikrotiterplatte aufgebracht werden. Dabei könnte das Muster auf besonders einfache Weise zwischen den Töpfen und/oder in den Töpfen einer Mikrotiterplatte aufgebracht werden.

In jedem Fall lässt sich ein derartiges vorgegebenes Muster auf einfache Weise optisch von dem durch das zu untersuchende Objekt gelieferten Bildmaterial trennen. Bei einer periodischen Struktur des Musters könnte eine Fourierfilterung zur Entfernung der Struktur aus dem Bild verwendet werden. Bei einer zufälligen Musterstruktur könnte eine statistische Unterscheidung durchgeführt werden, wobei die Punkteverteilung des Musters einer Gaußverteilung folgt und die Bildsignale einer Poissonverteilung folgen.

Zur Vermeidung einer Schädigung eines Objekts durch das erfindungsgemäße Verfahren zur Ermittlung einer bevorzugten Ebene könnte bei dem Verfahren zur Bestimmung der bevorzugten Ebene eine andere Wellenlänge des Beleuchtungslichts als bei der Objektuntersuchung verwendet werden. Dies bezieht sich auch auf die Bestimmung eingegrenzter Scanbereiche und Scanvolumina.

Insbesondere könnte die bei der Objektuntersuchung verwendete Wellenlänge kürzer sein als die zur Bestimmung der bevorzugten Ebene und des eingegrenzten Scanbereichs oder Scanvolumens verwendete Wellenlänge. Dabei wird berücksichtigt, dass Beleuchtungslicht mit längerer Wellenlänge üblicherweise geringere Schädigungen des Objekts hervorruft als Beleuchtungslicht mit kürzerer Wellenlänge.

In weiter vorteilhafter Weise könnte das Verfahren nach vorgebbaren und/oder ermittelbaren Zeitabständen wiederholt werden. Hierdurch könnte bspw. zeitabhängigen Temperaturdriften entgegengewirkt werden. Bei einem bekannten und vorhersehbaren Temperaturverhalten eines Objekts könnte dieses Verhalten zur Definition zeitabhängiger Scanbereiche und Scanvolumina verwendet werden. Mit anderen Worten könnten zu unterschiedlichen Zeiten einer Langzeitmessung unterschiedliche Scanbereiche und Scanvolumina abgescannt werden. Ein derartiges Erfordernis könnte bspw. bei sich mit der Zeit verändernden Objekten vorliegen. Hierdurch wäre eine weitere Optimierung des Untersuchungsverfahrens möglich.

Die anfangs formulierte Aufgabe wird des Weiteren durch ein Mikroskop zur Durchführung des erfindungsgemäßen Verfahrens gelöst. Hinsichtlich der Vorteile eines derartigen Mikroskops wird zur Vermeidung von Wiederholungen auf die vorangehende Beschreibung von Vorteilen der entsprechenden Verfahrensschritte verwiesen.

Die vorliegende Erfindung kann insbesondere bei konfokalen Laserscanning-Mikroskopen eingesetzt werden. Dabei dient die Erfindung zum vorzugsweise automatischen Finden und Einstellen einer bevorzugten, durch auswählbare Merkmale gekennzeichneten Bildebene. Ein Einsatz sowohl mit normalen Objektiven als auch mit Immersionsölobjektiven ist möglich. Letztendlich kann mit der Erfindung sowohl eine bevorzugte Fokusebene als auch ein optimierter Scanbereich in einer Raumrichtung bestimmt werden, um ein dreidimensionales Objekt vollständig zu erfassen.

Das Einsatzgebiet der Erfindung überdeckt alle bildgebenden Verfahren, bei denen ein optisches Schneiden ermöglicht wird, die also eine Serie von Bildern erzeugen, in denen keine oder nur wenige unscharfe Bereiche enthalten sind. Bei dem erfindungsgemäßen Verfahren findet quasi eine adaptive Autofokussierung statt. Dabei kann ein Scanrange-Modul an ein herkömmliches Mikroskop angekoppelt werden, um das Verfahren zu ermöglichen.

Das Verfahren kann auch mit Mikroskopen verwendet werden, die mit strukturierter Beleuchtung arbeiten oder das Spinning-Disc-Verfahren anwenden.

Mit dem erfindungsgemäßen Verfahren wird im Konkreten nicht nach der schärfsten Bildebene gesucht, sondern nach der Bildebene mit den meisten Informationen hinsichtlich bestimmter auswählbarer Merkmale. Insbesondere in Fällen, in denen kontrastbasierende Autofokusverfahren ihren Sinn verlieren, wie bspw. bei konfokalen Abbildungen, bei denen alle Bilder kontrastreich sind, hat ein merkmalsbezogener Detektor Vorteile.

Bei herkömmlich arbeitenden Autofokussystemen werden klar abgrenzbare Schärfenebenen erwartet, bei denen eine einzige Z-Ebene im Fokus ist und alle sie umgebenden Z-Ebenen außerhalb des Fokus sind.

Sämtliche bekannten Verfahren sind nicht in der Lage, neben einer Vorhersage einer geeigneten Fokusebene zusätzlich auch eine Vorhersage eines optimierten dreidimensionalen Scanbereichs zu liefern. Bei konfokal arbeitenden Mikroskopen ist des Weiteren jede Bildebene im Fokus, so dass die Aussage "im Fokus" nicht mehr genau zutrifft. Hier gibt es keine "scharfen" und "unscharfen" Z-Ebenen. Folglich wird bei der vorliegenden Erfindung von bevorzugten Ebenen gesprochen, die aufgrund des Vorliegens vorgebbarer Merkmale besonders bedeutsam und bevorzugt sind.

Bei dem erfindungsgemäßen Verfahren ist quasi eine Sprungvorhersage möglich, bei der der Fokus wellenlängenunabhängig in einem einstellbaren Wahrscheinlichkeitsbereich gesucht wird. Dabei ist das Verfahren an unterschiedliche Bildinhalte anpassbar, wobei eine derartige Anpassung manuell oder automatisch erfolgen kann. Das gesamte Verfahren ist aufgrund der Berücksichtigung bereits vorher ermittelter Daten lernfähig.

Mit dem erfindungsgemäßen Verfahren kann bei Flächenscans eine Fokuskarte erstellt werden. Des Weiteren kann eine Vermessung des Oberflächenprofils eines Objektträgers erfolgen. Durch Anpassung des Profils kann eine Kompensation von Driften, bspw. eine Temperaturdrift oder eine Drift durch eine Gewichtsveränderung des Objekts und/oder des Objektträgers, erfolgen.

Mit dem erfindungsgemäßen Verfahren werden schnelle vollautomatische Großflächenscans ermöglicht.

Bei der Auswahl oder Vorgabe von mindestens einem Kriterium der Bildanalyse können unterschiedlichen Objekten unterschiedliche Kriterien zugeordnet werden. Das Bildanalyseverfahren ahmt einen menschlichen Betrachter dahingehend nach, dass maschinell nach bestimmten Merkmalen - einem Merkmal oder einer bestimmten Kombination mehrerer Merkmale - gesucht wird. Eine bevorzugte Ebene wird dann in Abhängigkeit eines einstellbaren Grads an Übereinstimmung mit dem vorgebbaren Kriterium oder den vorgebbaren Kriterien eingestellt. Dabei können die vom Anwender eingestellten Ebenen-Merkmale gespeichert und die Suche nach der besten Ebene in deren Nähe gestartet werden.

Es gibt nun verschiedene Möglichkeiten, die Lehre der vorliegenden Erfindung in vorteilhafter Weise auszugestalten und weiterzubilden. Dazu ist einerseits auf die nachgeordneten Patentansprüche und andererseits auf die nachfolgende Erläuterung bevorzugter Ausführungsbeispiele der Erfindung anhand der Zeichnung zu verweisen.

Weitere Ausführungsformen werden durch die folgenden Punke erläutert:

1. Verfahren zur Untersuchung eines Objekts mit einem Mikroskop, insbesondere einem konfokalen Scanmikroskop, mit den folgenden Schritten:

- Auswählen eines ein zu untersuchendes Objekt oder mehrere zu untersuchende Objekte enthaltenden Scanbereichs in einer vorgebbaren Raumrichtung,
- Aufnehmen einer Serie von Bildern in dem Scanbereich entlang der Raumrichtung, so dass die einzelnen Bilder einzelnen Ebenen in der Raumrichtung eineindeutig zuordenbar sind,

- Auswählen eines Bildanalyseverfahrens mit mindestens einem vorgebbaren Kriterium hinsichtlich des zu untersuchenden Objekts oder der zu untersuchenden Objekte und
- Anwenden des Bildanalyseverfahrens auf die einzelnen Ebenen zur Ermittlung einer das oder die vorgebbaren Kriterien zumindest weitgehend erfüllenden bevorzugten Ebene.

2. Verfahren nach Punkt 1, dadurch gekennzeichnet, dass das Bildanalyseverfahren oder ein anderes Bildanalyseverfahren zur Bestimmung von Grenzebenen in der Raumrichtung angewendet wird, so dass für mindestens ein Objekt ein durch die Grenzebenen eingegrenzter Scanbereich mit Objektinformation enthaltenden Ebenen in der Raumrichtung definierbar ist, der somit das jeweilige Objekt vollständig enthält, aber keine Ebenen ohne Objektinformation aufweist.

3. Verfahren nach Punkt 1 oder 2, dadurch gekennzeichnet, dass die Raumrichtung die Z-Richtung ist.

4. Verfahren nach Punkt 2, dadurch gekennzeichnet, dass das Verfahren entlang aller Raumrichtungen durchgeführt wird, um mindestens ein aus eingegrenzten Scanbereichen der jeweiligen Raumrichtungen gebildetes eingegrenztes, das jeweilige Objekt vollständig enthaltendes Scanvolumen zu definieren.

5. Verfahren nach einem der Punkte 1 bis 4, dadurch gekennzeichnet, dass das mindestens eine Kriterium des Bildanalyseverfahrens die Geometrie, die Form, die Farbe, die Struktur, eine Kolokalisation, eine Umgebung, ein Zeitverhalten oder eine Anzahl an Objekten oder Kombinationen hiervon umfasst.

6. Verfahren nach einem der Punkte 1 bis 5, dadurch gekennzeichnet, dass das Bildanalyseverfahren nach vorgebbaren Kriterien automatisch ausgewählt wird.

7. Verfahren nach einem der Punkte 1 bis 6, dadurch gekennzeichnet, dass das Verfahren während der Objektuntersuchung durchgeführt wird.

8. Verfahren nach einem der Punkte 1 bis 7, dadurch gekennzeichnet, dass mittels des Verfahrens bei einer Untersuchung eines flächigen Probenbereichs eine Karte aus Ortskoordinaten bevorzugter Ebenen erzeugt wird.

9. Verfahren nach einem der Punkte 1 bis 8, dadurch gekennzeichnet, dass die Auswahl eines ein zu untersuchendes Objekt oder mehrere zu untersuchende Objekte enthaltenden Scanbereichs in einer vorgebbaren Raumrichtung beim Fortschreiten von einer ersten Ortskoordinate zu einer zweiten Ortskoordinate die Position der bevorzugten Ebene bei der ersten Ortskoordinate berücksichtigt.

10. Verfahren nach Punkt 9, dadurch gekennzeichnet, dass der ausgewählte Scanbereich für die zweite Ortskoordinate die bevorzugte Ebene des Scanbereichs bei der ersten Ortskoordinate aufweist.

11. Verfahren nach einem der Punkte 1 bis 10, dadurch gekennzeichnet, dass die Auswahl eines ein zu untersuchendes Objekt oder mehrere zu untersuchende Objekte enthaltenden Scanbereichs in einer vorgebbaren Raumrichtung unter Berücksichtigung der Oberflächenform und/oder -struktur eines Objektträgers erfolgt.

12. Verfahren nach Punkt 11, dadurch gekennzeichnet, dass die Oberfläche des Objektträgers als Ebene angenommen wird und ausgehend von drei bekannten Punkten auf dem Objektträger berechnet wird.

13. Verfahren nach Punkt 11, dadurch gekennzeichnet, dass die Oberfläche des Objektträgers ausgehend von mindestens vier bekannten Punkten triangularisiert wird.

14. Verfahren nach Punkt 11, dadurch gekennzeichnet, dass die Oberfläche des Objektträgers durch n-Ecke oder Vielecke angenähert wird.

15. Verfahren nach Punkt 11, dadurch gekennzeichnet, dass die Oberfläche des Objektträgers ausgehend von n bekannten Punkten durch einen Polynom-Fit angenähert wird.

16. Verfahren nach einem der Punkte 12 bis 15, dadurch gekennzeichnet, dass die bekannten Punkte manuell oder ausgehend von den Koordinaten bereits ermittelter bevorzugter Ebenen bestimmt werden.

17. Verfahren nach einem der Punkte 11 bis 16, dadurch gekennzeichnet, dass die Oberfläche des Objektträgers in mehrere Scanfelder aufgeteilt wird und dass nach Bestimmung der Position eines ersten Scanfelds bei der Bestimmung der Position eines benachbarten Scanfelds die Position des ersten Scanfelds berücksichtigt wird.

18. Verfahren nach einem der Punkte 11 bis 17, dadurch gekennzeichnet, dass auf den Objektträger auf eine seiner Oberflächen oder in das Innere des Objektträgers ein regelmäßiges oder unregelmäßiges Muster auf- oder eingebracht wird.

19. Verfahren nach Punkte 18, dadurch gekennzeichnet, dass das Muster schwarz-weiß oder farbig ist und/oder fluoreszierende Punkte oder Bereiche aufweist.

20. Verfahren nach Punkt 19, dadurch gekennzeichnet, dass die fluoreszierenden Punkte oder Bereiche auf eine vorgebbare Wellenlänge reagieren.

21. Verfahren nach Punkte 19 oder 20, dadurch gekennzeichnet, dass ein fluoreszierendes zu untersuchendes Objekt von den fluoreszierenden Punkten oder Bereichen optisch getrennt wird.

22. Verfahren nach einem der Punkte 18 bis 21, dadurch gekennzeichnet, dass das Muster zur Berechnung, Triangularisierung oder Annäherung der Oberfläche des Objektträgers verwendet wird.

23. Verfahren nach einem der Punkte 18 bis 22, dadurch gekennzeichnet, dass das Muster auf einen im Wesentlichen ebenen Objektträger aufgebracht wird.

24. Verfahren nach einem der Punkte 18 bis 22, dadurch gekennzeichnet, dass das Muster auf eine Mikrotiterplatte aufgebracht wird.

25. Verfahren nach Punkt 24, dadurch gekennzeichnet, dass das Muster zwischen den Töpfen und/oder in den Töpfen einer Mikrotiterplatte aufgebracht wird.

26. Verfahren nach einem der Punkt 1 bis 25, dadurch gekennzeichnet, dass bei dem Verfahren zur Bestimmung der bevorzugten Ebene und des eingegrenzten Scanbereichs eine andere Wellenlänge des Beleuchtungslichts als bei der Objektuntersuchung verwendet wird.

27. Verfahren nach einem der Punkte 1 bis 26, dadurch gekennzeichnet, dass die bei der Objektuntersuchung verwendete Wellenlänge kürzer ist als die zur Bestimmung der bevorzugten Ebene und des eingegrenzten Scanbereichs verwendete Wellenlänge.

28. Verfahren nach einem der Punkte 1 bis 27, dadurch gekennzeichnet, dass das Verfahren nach vorgebbaren und/oder ermittelbaren Zeitabständen wiederholt wird.

29. Mikroskop zur Durchführung des Verfahrens nach einem der Punkte 1 bis 28.

In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen

Fig. 1 in einer Skizze einen Z-Stapel von Bildern durch kugelförmige Objekte,

Fig. 2 in einer Skizze einen Z-Stapel von Bildern durch kugelförmige und pyramidenförmige Objekte,

Fig. 3 in einer schematischen Darstellung das prinzipielle Bestimmen eines eingegrenzten Scanbereichs,

Fig.4 in einem Flussdiagramm einen prinzipiellen Ablauf eines Ausführungsbeispiels des erfindungsgemäßen Verfahrens,

Fig. 5 eine prinzipielle Darstellung der Ermittlung eines eingegrenzten Scanvolumens,

Fig. 6 den Ablauf einer Präzisierung der Scanbereiche von auf einer Fläche angeordneten Objekten,

Fig. 7    drei Z-Stapel zur Bestimmung einer Ebene,

Fig. 8    in einer schematischen Darstellung eine berechnete schiefe Ebene im Raum,

Fig. 9    in einer schematischen Darstellung die Präzisierung der Scanbereiche ausgehend von der geschätzten Ebene,

Fig. 10    in einem Flussdiagramm die Ermittlung einer Ebene,

Fig. 11    in einer schematischen Darstellung eine Triangularisierung,

Fig. 12    in einer schematischen Darstellung eine Triangularisierung einer Ebene in zwei Dreiecke,

Fig. 13    in einem Flussdiagramm einen Verfahrensablauf zur Triangularisierung,

Fig. 14    in drei schematischen Darstellungen eine Annäherung einer Oberfläche über Vierecke,

Fig. 15    einen zweidimensionalen Kurven-Fit,

Fig. 16    ein Beispiel einer Schar gemessener Punkte P im Raum,

Fig. 17    in einer schematischen Darstellung eine an die Punkte von Fig. 16 angenäherte Fläche,

Fig. 18    in einem Flussdiagramm einen Verfahrensablauf zur Erzeugung einer Fläche,

Fig. 19    in einer schematischen Darstellung eine in Scanfelder aufgeteilte gekrümmte Scanfläche,

Fig. 20    in schematischer Darstellung einen Verfahrensablauf für ein Sprungverfahren,

Fig. 21    eine Prinzipdarstellung der Sprungvorhersage beim Scan der ersten drei Felder einer Matrix,

Fig. 22    in einer schematischen Draufsicht und in einer Seitenansicht einen mit Punkten versehenen Objektträger und

Fig. 23    in einer schematischen Draufsicht und in einer schematischen Seitenansicht eine Mikrotiterplatte mit aufgebrachtem Punktemuster.

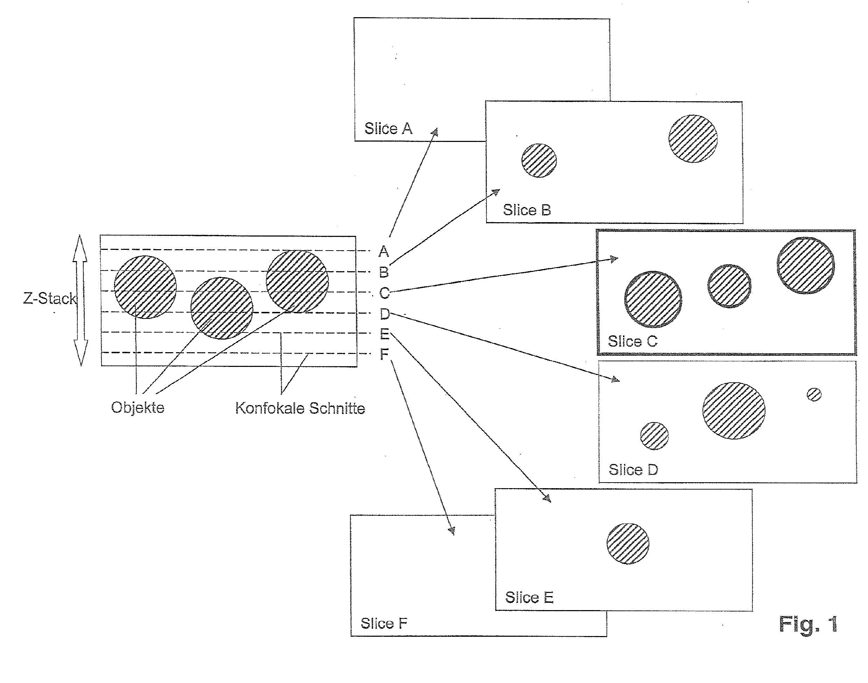

Fig. 1 zeigt in einer schematischen Darstellung einen Z-Stapel oder z-Stack von Bildern, die durch kugelförmige Objekte hindurch aufgenommen sind. Der Z-Stapel besteht aus sechs Schnittebenen - Slices - die durch die Buchstaben A, B, C, D, E und F gekennzeichnet sind. Jeder Schnitt - Slice - weist eine unterschiedliche Menge an Objekten auf. Die Objekte in den Schnittbildern unterscheiden sich in Form, Größe und Anzahl. Die folgende Tabelle charakterisiert die einzelnen Schnitte hinsichtlich Form, Größe und Anzahl.

| Slice Nummer | Form rund | Anzahl rund | Fläche rund | Beurteilung |
|---|---|---|---|---|
| A | nein | 0 | 0 | **außerhalb Stack** |
| B | ja | 2 | klein | |
| C | ja | 3 | maximal | **beste Ebene** |
| D | ja | 3 | klein | |
| E | ja | 1 | Sehr klein | |
| F | nein | 0 | 0 | **außerhalb Stack** |

Eine Analyse der Kombination der Merkmale Form, Größe und Anzahl für jede Schnitteebene erlaubt eine Bestimmung der bevorzugten Ebene und darüber hinaus eine Bestimmung der Ebenen ohne Inhalt. Demnach liegt die günstigste Stapelgröße für den Scan im Intervall zwischen B und E und die Ebene C enthält die meisten Informationen.

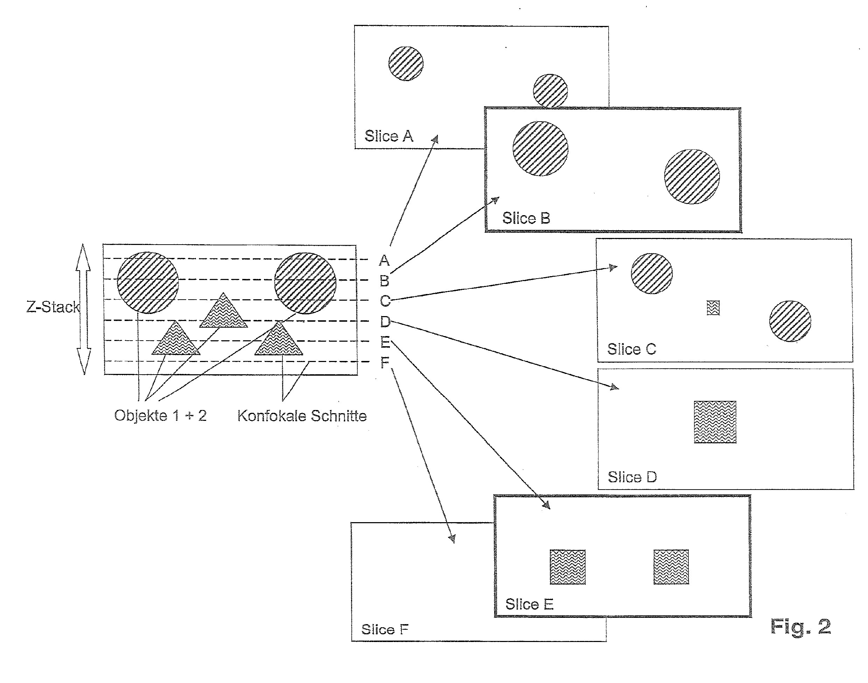

Fig. 2 zeigt einen z-Stack von Bildern durch kugelförmige und pyramidenförmige Objekte. Der z-Stack besteht aus sechs Schnittebenen - Slices - die mit den Buchstaben A bis F gekennzeichnet sind.

Jeder Schnitt enthält eine unterschiedliche Menge an Objekten. Die Objekte in den Schnittbildern unterscheiden sich in Form - Schnitte durch Kugeln sind kreisförmig, durch Pyramiden quadratisch-, Größe und Anzahl. Die Verteilung der Objekte im Raum führt zu zwei "Fokus"-Ebenen oder bevorzugten Ebenen (Slices of interest = SOI). Die folgende Tabelle gibt das Ergebnis der Schnitte wider:

| Slice Nummer | Form rund | Form pyramidisch | Anzahl rund | Anzahl pyramidisch | Fläche rund | Fläche pyramidisch | Beurteilung |
|---|---|---|---|---|---|---|---|
| A | ja | nein | 2 | 0 | klein | 0 | |
| B | ja | nein | 2 | 0 | maximal | 0 | **beste Ebene rund** |
| C | ja | ja | 2 | 1 | klein | sehr klein | |
| D | nein | ja | 0 | 1 | 0 | maximal | |
| E | nein | ja | 0 | 2 | 0 | klein | **beste Ebene pyram.** |
| F | nein | nein | 0 | 0 | 0 | 0 | **außerhalb Stack** |

Für jeden Objekttyp gibt es eine andere Ebene mit bester Informationsverteilung für diesen Objekttyp (Slice of interest (Objekttyp ob) = SOI (ob)).

Es gibt darüber hinaus auch unterschiedliche Scanbereiche in der Z-Richtung, die den jeweiligen Objekttyp optimal erfassen.

In der folgenden Tabelle wird das Ergebnis dieses Beispiels nochmals zusammengefasst:

Definition

- ob = 1 = runde Objekte (SOI(1) = beste Ebene für runde Objekte)
- ob = 2 = pyramidische Objekte (SOI(2) = beste Ebene für pyramidische Objekte)

| Slice Nummer | SOI (1) | SOI (2) | Scanrange 1 | Scanrange 2 |
|---|---|---|---|---|
| A | | | X | |
| B | X | | X | |
| C | | | X | X |
| D | | | | X |
| E | | X | | X |
| F | | | | |

Die beste Ebene für die Objekte ist dabei durchaus nicht eindeutig, sie liegt aber immer in der besten Position für den Scan. So könnte auch Slice D als beste Ebene für das pyramidische Objekt gelten. Je nach Einstellung der Merkmalsextraktion kann man erreichen, dass Slice D oder Slice E als beste Ebene detektiert wird.

Zudem ist oft eine genaue zahlenmäßige Klassifikation (Wie rund genau? Wie groß ist die Fläche genau, ab der klassifiziert wird?) relativ ungünstig für die Ebenenbestimmung. Vielmehr eignen sich für bestimmte Merkmale besser linguistische Variablen für die Klassifikation (Fuzzy-Logik). Linguistische Variablen sind bspw. klein, sehr klein, groß, sehr groß, usw..

Andere Klassifikatoren können dagegen besser in reiner Zahlenform ausgewertet werden, bspw. die Anzahl von Objekten.

Bei der vorliegenden Erfindung kann eine Kombination beider Klassifikationstypen verwendet werden, nämlich Fuzzy-Klassifikation und herkömmliche Klassifikation. Somit sind Merkmalsextraktionen wie "wenn mehr als 20 relativ kleine Objekte gefunden wurden, dann wähle diese Ebene" möglich.

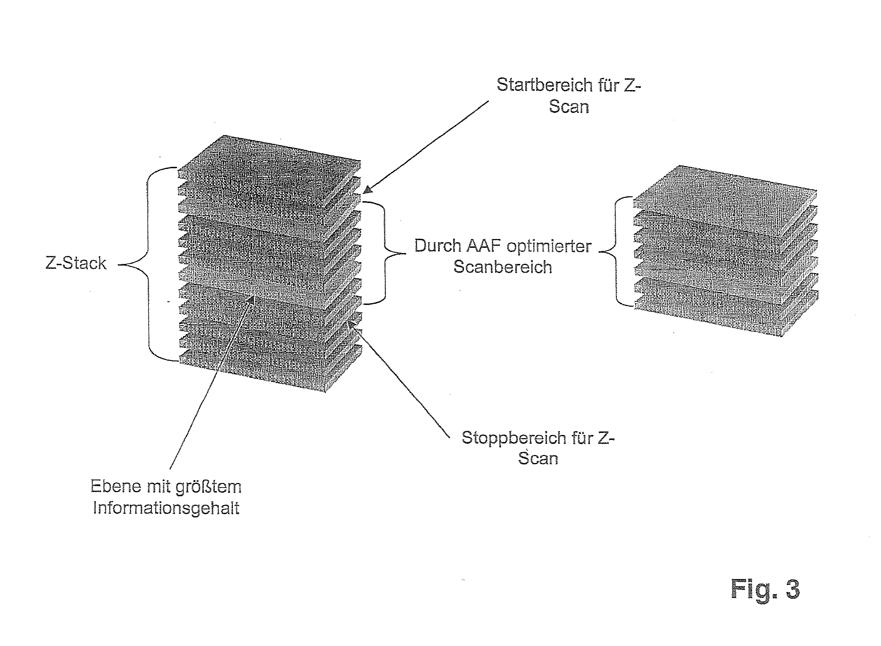

Fig. 3 zeigt in schematischer Darstellung zwei Scan-Stapel in Z-Richtung. Der linke Stapel zeigt einen ursprünglich ausgewählten Scanbereich und der rechte Stapel den eingegrenzten oder optimierten Scanbereich. Dabei ist die Ebene mit größtem Informationsgehalt und sind der Startbereich für den z-Scan und der Stoppbereich für den z-Scanbereich dargestellt.

Der Startbereich und der Stoppbereich können durch das erfindungsgemäße Verfahren automatisch ermittelt werden. Alle außerhalb des optimierten Scanbereichs liegenden Scanabschnitte weisen keine oder keine relevante Objektinformation auf.

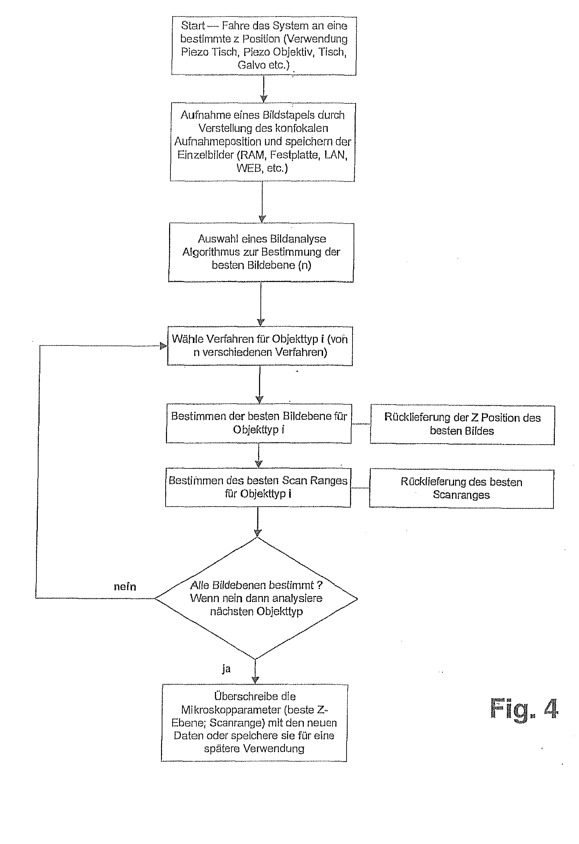

Fig. 4 stellt ein Ausführungsbeispiel des erfindungsgemäßen Verfahrens in einem Flussdiagramm dar.

Insbesondere bei konfokal arbeitenden Mikroskopen hat man oft die Möglichkeit, zusätzlich zur gewohnten Aufsicht - Scan läuft in Z-Richtung, Betrachter schaut auf die X-Y-Ebene - auch Schnittserien in der X-Z-und/oder Y-Z-Ebene durchzuführen. Dies ergibt nach dem oben beschriebenen Verfahren die Möglichkeit, nicht nur einen optimalen Scanbereich in Z-Richtung, sondern auch ein optimales Scanvolumen automatisch zu bestimmen. Ein optimales Scanvolumen ist dadurch gekennzeichnet, dass es das zu untersuchende Objekt so eng wie möglich umschließt. Dabei liegen innerhalb des optimalen Scanvolumens alle Objektinformationen, während außerhalb des optimalen Scanvolumens keine Objektinformationen liegen.

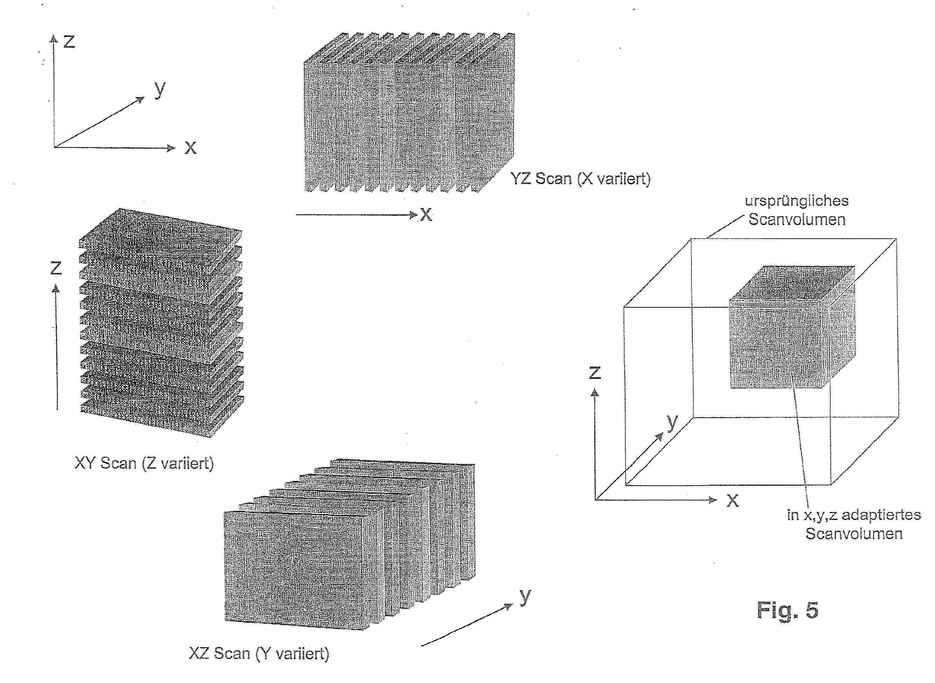

Fig. 5 zeigt dies in einer schematischen Darstellung, wobei nach Variation des Z-, X- und Y-Scans ein adaptiertes eingegrenztes Scanvolumen gebildet wird. Die Einzelscans werden mit der Maßgabe durchgeführt, automatisch die Ebene mit den meisten Objektinformationen und dem optimalen Scanbereich zu bestimmen.

Gemäß der Fig. 5 ergibt sich die folgende Ergebniszusammenfassung:

| | | |
|---|---|---|
| XY Scan (Z variiert) | grüne Ebene (Zgre) | Der durch das vorgestellte Verfahren automatisch ermittelte obere Startpunkt für den Scan in Z Richtung |
| | gelbe Ebene (Zgee) | Die ebene mit den meisten Informationen. Dabei wird die gesuchte Information vom Anwender vorgegeben, also z.B. suche das größte, runde Objekt in Z |
| | rote Ebene (Zroe) | Der durch das vorgestellte Verfahren automatisch ermittelte untere Endpunkt für den Scan in Z Richtung |
| XZ Scan (Y variiert) | grüne Ebene (Ygre) | Der durch das vorgestellte Verfahren automatisch ermittelte obere Startpunkt für den Scan in Y Richtung |
| | gelbe Ebene (Ygee) | Die ebene mit den meisten Informationen. Dabei wird die gesuchte Information vom Anwender vorgegeben, also z.B. suche das größte, runde Objekt in Y |
| | rote Ebene (Yroe) | Der durch das vorgestellte Verfahren automatisch ermittelte untere Endpunkt für den Scan in Y Richtung |
| YZ Scan (X variiert) | grüne Ebene (Xgre) | Der durch das vorgestellte Verfahren automatisch ermittelte obere Startpunkt für den Scan in X Richtung |
| | gelbe Ebene (Xgee) | Die ebene mit den meisten Informationen. Dabei wird die gesuchte Information vom Anwender vorgegeben, also z.B. suche das größte, runde Objekt in X |
| | rote Ebene (Xroe) | Der durch das vorgestellte Verfahren automatisch ermittelte untere Endpunkt für den Scan in X Richtung |

Für das optimale Scanvolumen ergeben sich nunmehr 3 optimale Scanbereiche

$$Dx = |Xgre - Xroe|$$

$$Dy = |Ygre - Yroe|$$

$$Dz = |Zgre - Zroe|$$

welche das optimierte Scanvolumen

$$Vopt = V(Dx, Dy, Dz)$$

aufspannen. Innerhalb des optimalen Scanvolumens Vopt liegt der Punkt maximaler Information Pbest zu dem gesuchten Objekt.

$$Pbest = P(Xgee, Ygee, Zgee)$$

Pbest muss nicht im Zentrum von Vopt, aber immer innerhalb von Vopt liegen.

Mit dem Verfahren kann also zugleich eine Bestimmung des Raumpunktes maximaler Information Pbest als auch eine Anpassung des zuvor eingestellten Scanbereiches auf ein optimales Scanvolumen Vopt erreicht werden. Mit dem Verfahren erreicht man für die konfokale Mikroskopie also zugleich ein Maximum an Information wie auch ein Minimum an erforderlicher Scanzeit und an erforderlichem Speicherbedarf für die Information. Beide Vorteile spielen ihre Stärke insbesondere in Verfahren aus, in denen eine große Anzahl gleichartiger Scans automatisiert durchgeführt werden muss, also z.B. bei dem Abscannen einer Mikrotiterplatte mit mehreren 100 einzelnen Scanpunkten.

Das folgende Ausführungsbeispiel betrifft den Fall eines Abscannens einer größeren Fläche, bei der mehrere Punkte $P = P(x_I, y_J)$ innerhalb einer Fläche angefahren werden, wobei das Anfahren vorzugsweise durch einen motorisierten Tisch und automatisch erfolgt. Das oben beschriebene Verfahren ist für einen einzelnen Scanpunkt beschrieben, wobei sich das Verfahren wie folgt zusammenfassen lässt:

| **Vor** Bestimmung des opt. Scanbereiches und der Position des Punktes mit höchster Information | **Nach** Bestimmung des opt. Scanbereiches und der Position des Punktes mit höchster Information |
|---|---|
| P = P(x,y,z) <br> V = V(dx, dy, dz) <br> Wobei: <br> • P = voreingestellter Scanpunkt <br> • V = voreingestelltes Scanvolumen <br> • x,y,z = Scan Position <br><br> • dx, dy, dz = aufgespanntes Scanvolumen | Pbest = P(Xgee, Ygee, Zgee) <br> Vopt = V(Dx, Dy, Dz) <br> Wobei: <br> • Pbest = optimaler Scanpunkt <br> • Vopt = optimales Scanvolumen <br> • Xgee, Ygee, Zgee = Scan Position des optimalen Scanpunktes <br> • Dx, Dy, Dz = aufgespanntes Scanvolumen mit optimalem Scanrange, vorzugsweise in alle Raumrichtungen |

Beim Abscannen eines Bereichs mit vielen Punkten liegt die Situation vor, dass vor der Bestimmung des optimalen Scanbereichs eine Schar von Scanpositionen bekannt ist, die sich über ein vorgegebenes Raumvolumen wie folgt verteilen:

$$P = P\left(x_i, y_j, z_k\right) \ \left\{\forall\, (x \in [a,b],\ y \in [c,d],\ z \in [e,f])\right\},$$

wobei die einzelnen Scanpunkt-Positionen im ersten Schritt geschätzt werden. Anschließend werden in einem zweiten Schritt alle Schätzpunkte präzisiert, d.h. die Punkte $P = P(x_i, y_j)$ werden jeweils einzeln angefahren und mit dem obigen Verfahren werden je Punkt die Position der höchsten Information und der optimale Scanbereich - optimales Scanvolumen - bestimmt.

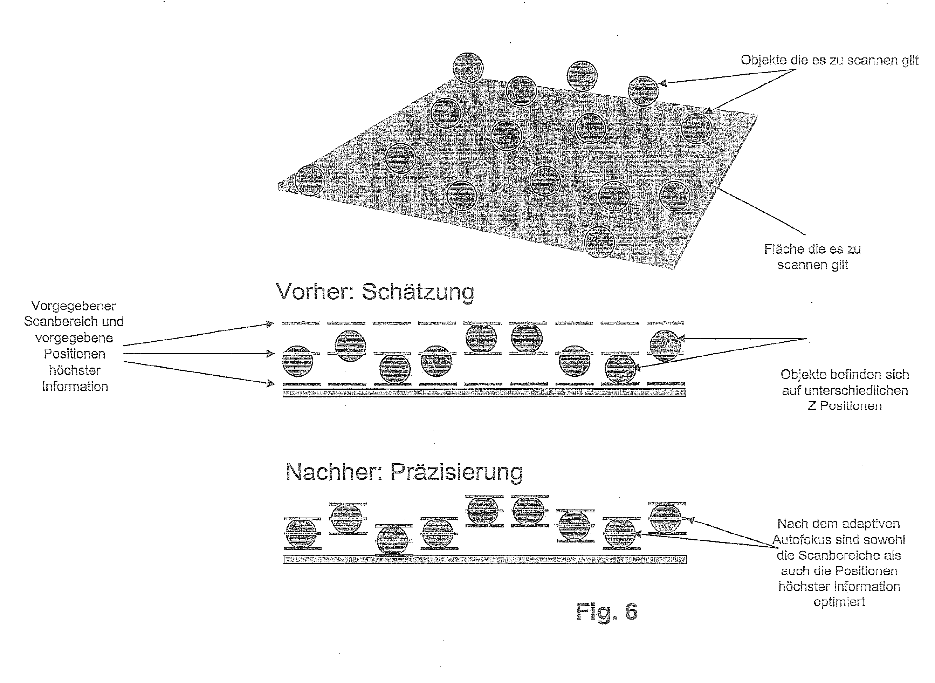

Fig. 6 zeigt diesbezüglich die Situation vor der Schätzung und nach erfolgter Präzisierung. Im oberen Teil der Fig. 6 ist die Scanfläche mit den zu untersuchenden Objekten gezeigt. Die Objekte liegen an verschiedenen X-Y-Z-Positionen über die Scanfläche verteilt. Das mittlere Bild zeigt eine Ansicht von der Seite auf die Scanfläche. Die zu untersuchenden Objekte liegen dabei nicht äquidistant zu der Auflagefläche, die bspw. in Form eines Objektträgers vorliegt. Sie befinden sich in unterschiedlichen Z-Positionen. Da die genaue Lage der Objekte noch nicht ermittelt ist, wird mit einer Schätzung des Scanbereichs begonnen, der die Objekte mit Sicherheit erfasst. Der Scanbereich der Schätzung ist immer größer oder gleich dem optimalen Scanabereich. Die Position höchster Information liegt immer innerhalb des Scanbereichs. Daher gilt vor der Präzisierung:

V > Vopt
dx > Dx
dy > Dy
dz > Dz
P im Intervall ([Xgre - Xroe], [Ygre - Yroe], [Ygre - Yroe])

Nach dem zweiten Schritt (Präzisierung) liegt eine Zahlenmatrix vor, die zu jedem Scanpunkt $P = P(x_i, y_j)$ individuell die optimierten Daten bezüglich Scanbereich und Scanvolumen und Position höchster Information enthält, wie dies in dem unteren Bild der Fig. 6 dargestellt ist.

Falls die Scanfläche in ihrer X-Y-Ausdehnung bekannt ist, kann man unter der Annahme, dass die Eckpunkte des Scanfelds bekannt sind und dass die Ebene, die es zu beschreiben gilt, nicht gekrümmt, sondern plan ist, eine mathematische Abschätzung der etwaigen Fokuspositionen durchführen. Hierdurch lässt sich die erste Auswahl eines Scanbereichs in einer vorgebbaren Raumrichtung vereinfachen.

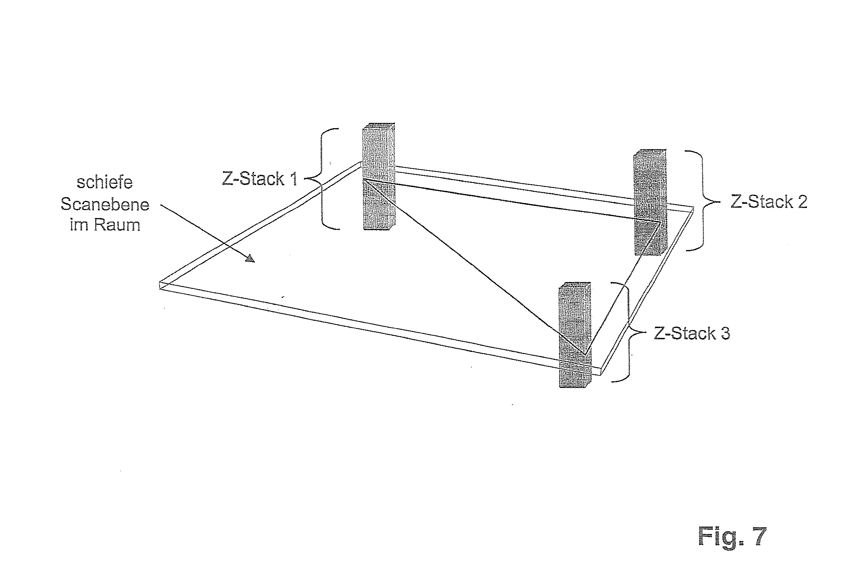

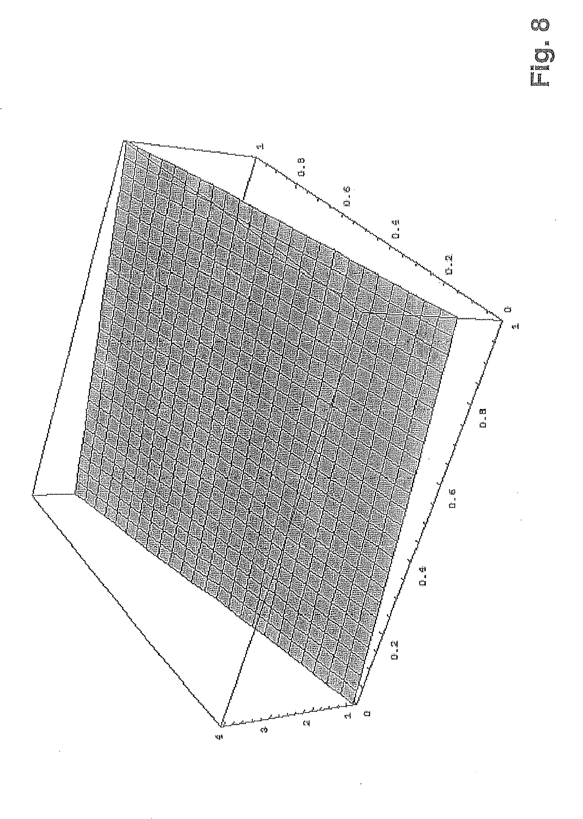

Fig. 7 zeigt hierzu drei Punkte im Falle eines konfokalen Mikroskops, wobei die Z-Stapel die drei Bildstapel zeigen, die an den drei Punkten der Ebene aufgezeichnet wurden. Die in Fig. 8 gezeigte Ebene wurde anhand der drei Punkte eindeutig beschrieben. Um nun den Punkt zu bestimmen, der genau auf der Ebene - Objektträger - liegt, wurden zwei Varianten realisiert. Die Variante 1 umfasst ein manuelles Einstellen, wobei der Operator ein Objekt sucht und durch Verstellen der Z-Ebene die Position mit höchster Information manuell einstellt. Gemäß einer zweiten Variante kann ein automatisches Einstellen erfolgen, wobei das System unter Ausnutzung des weiter oben beschriebenen Suchverfahrens automatisch die Position höchster Information sucht.

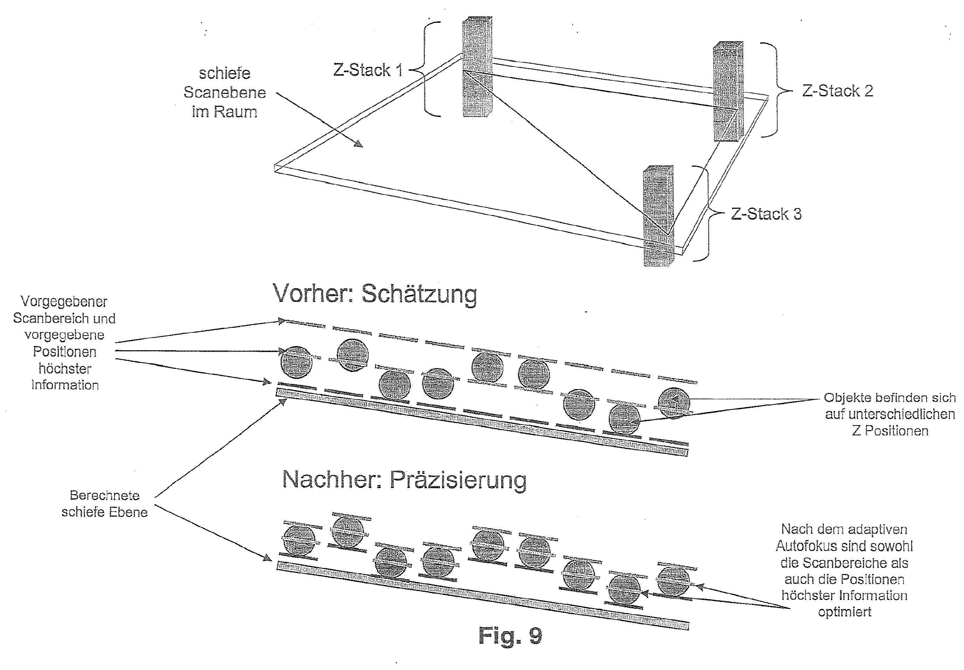

Fig. 9 zeigt in einer schematischen Darstellung die Situation einer bestimmten schiefen Scanebene im Raum mit einer zunächst erfolgten Schätzung und anschließenden Präzisierung der Positionen. Das Abschätzen der ungefähren Lage der Scanobjekte und deren anschließende Präzisierung ergibt sich wie folgt:

1. Messe manuell oder automatisch drei unterschiedliche Punkte auf dem Objektträger.
2. Berechne gemäß obiger Gleichungen alle Punkte $P = P(x_i, y_j, z_{ij(geschätzt)})$, die auf der Ebene liegen, zu der die drei Punkte manuell oder automatisch bestimmt wurden.
3. Fahre nun alle berechneten Punkte auf der Scanebene an und bestimme gemäß obigem Verfahren die genaue $z_{ij(präzise)}$ Position und den optimalen Scanrange.
4. Ersetze die $z_{ij(geschätzt)}$ Werte durch die genau bestimmten $z_{ij(präzise)}$ Werte.

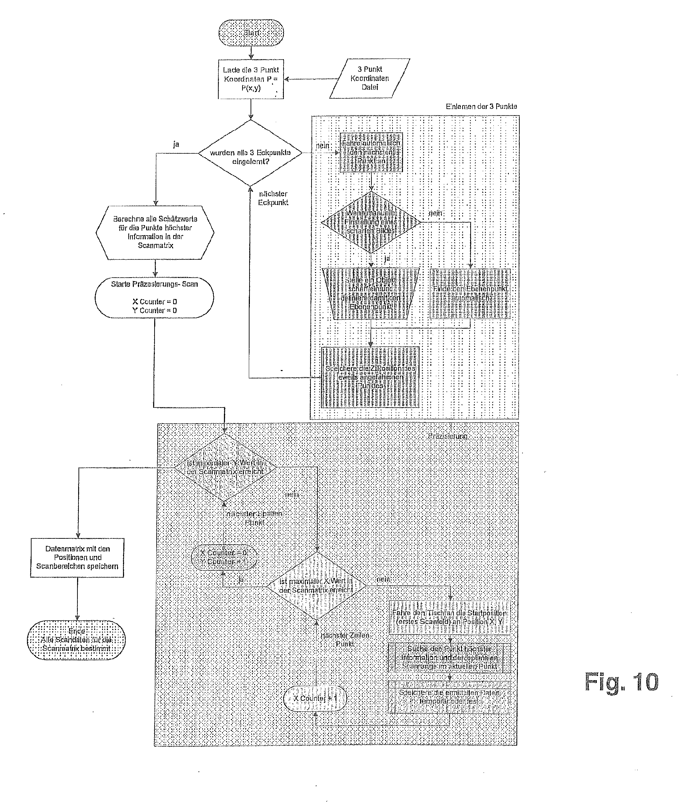

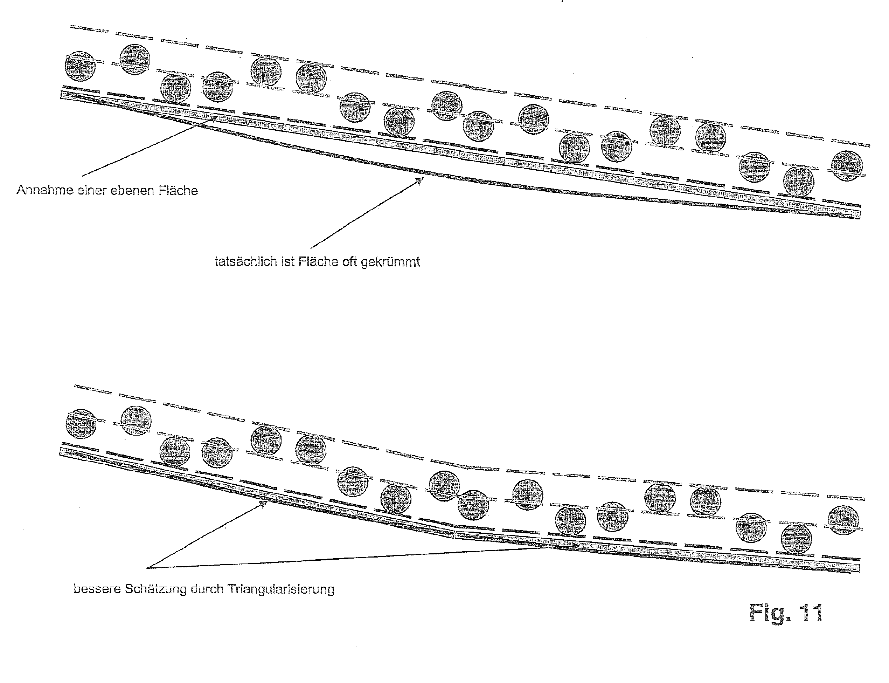

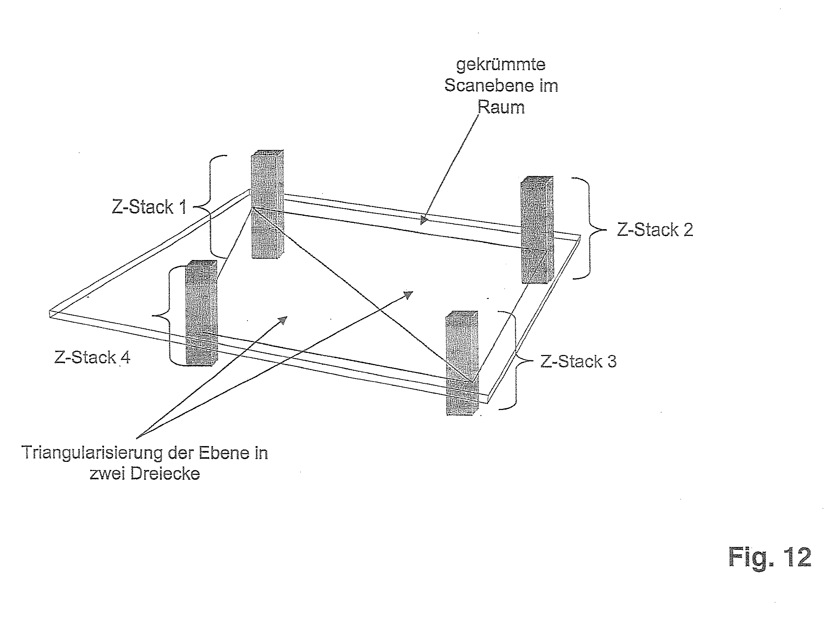

Die Fig. 10 zeigt in einem Flussdiagramm das Schema der Umsetzung des vorherigen Ausführungsbeispiels.
Im Allgemeinen sind die Oberflächen von Objektträgern gekrümmt, d.h. die Annahme einer Ebene im Raum trifft in der Realität nicht zu. In diesen Fällen kann eine Schätzung über drei Punkte zu ungenau sein. Daher kann eine Schätzung über n eingestellte Punkte, eine Triangularisierung und eine anschließende Präzisierung erfolgen. Dies ist in Fig. 11 schematisch dargestellt, wobei im oberen Teil eine ebene Fläche als Näherung angenommen ist. Um die Schätzung zu verbessern, wurde die Oberfläche gemäß unterem Teil der Fig. 11 triangularisiert, d.h. in mehrere Dreiecksebenen unterteilt, die eine bessere Adaption an eine gekrümmte Fläche erlauben, als eine einzelne Fläche. Gemäß dem unteren Teil der Fig. 11 ist eine Aufteilung in zwei einzelne Ebenen erfolgt, die in einem günstigen Winkel zueinander stehen. Allein diese Aufteilung in lediglich zwei einzelne Ebenen erlaubt eine deutlich bessere Adaption der Schätzwerte an eine gekrümmte Oberfläche. Um eine Triangularisierung in der Praxis durchzuführen, müssen in der Scanmatrix mehr als drei Punkte definiert sein, wobei $P = P(x_i, y_j, z_{ij})$ für $i > 1$ und $j > 1$. Für bspw. vier Punkte ließen sich zwei Dreiecke definieren, die eine gekrümmte Oberfläche in zwei Ebenen triangularisiert. Dies ist bspw. in Fig. 12 dargestellt.

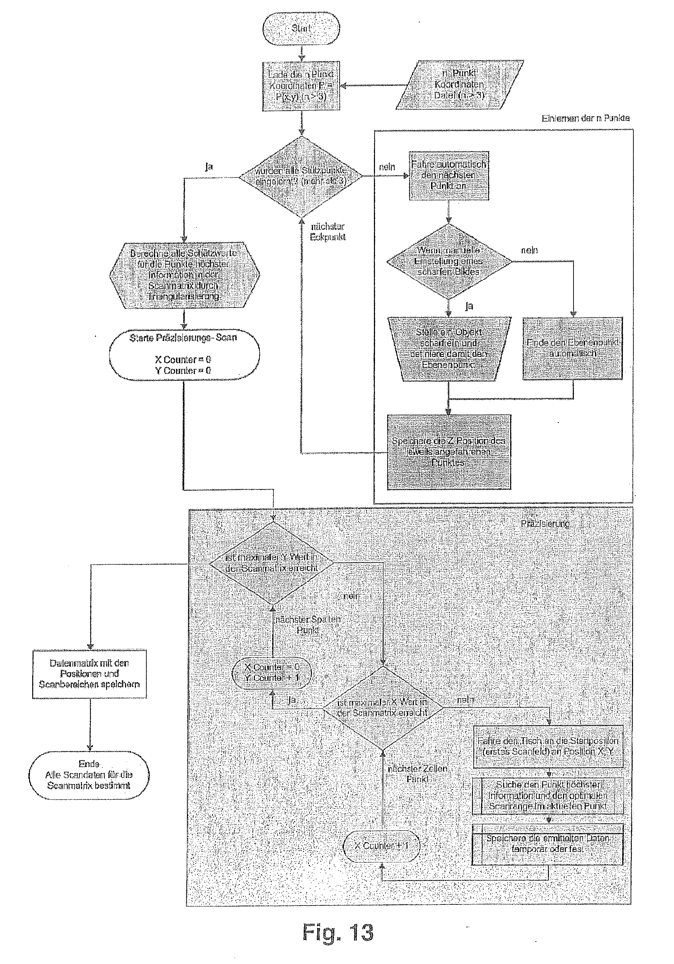

Je nach Anzahl der bekannten Punkte P lässt sich die Anzahl der triangularisierenden Dreiecke vergrößern und lässt sich eine immer bessere Approximation der "Schätzfläche" an die tatsächliche, im allgemeinen gekrümmte Oberfläche des Scanobjekts, vorzugsweise ein Objektträger, erreichen. Wie vorher bereits beschrieben, schließt sich dann dieser Schätzung, die zuvor auf der Annahme einer Ebene beruhte und jetzt durch Triangularisierung an eine gekrümmte Oberfläche stückweise adaptierbar ist, ein Präzisierungsscan an, in welchem wie weiter oben beschrieben die genauen Z-Positionen höchster Information und der optimale Scanrange für jeden Punkt P der Scanmatrix bestimmt wird. In dem in Fig. 13 gezeigten Flussdiagramm ist dieser prinzipielle Ablauf dargelegt. Im Gegensatz zum vorherigen Ausführungsbeispiel werden nun mehr als drei Stützpunkte eingelernt. Die x-y-z-Werte der Stützpunkte werden dann benutzt, um die Fläche durch Triangularisierung zu berechnen. Dabei wird je ein Dreieck zwischen drei Punkte - Teilmenge der n gescannten Punkte - gelegt. Anschließend wird wie vorher ein Präzisierungsscan durchgeführt.

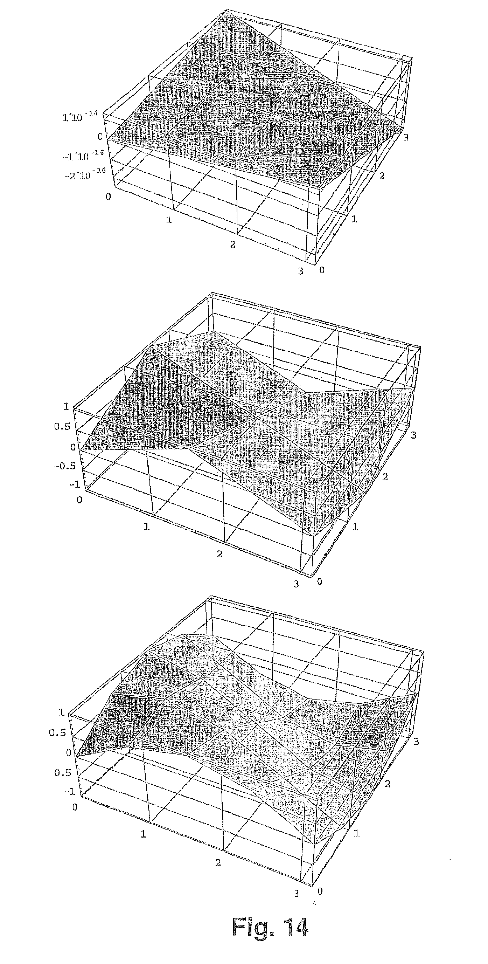

Neben Dreiecken kann man eine Oberfläche auch durch andere Flächentypen wie bspw. n-Ecke oder Vielecke annähern. Fig. 14 zeigt hierzu Beispiele mit Vierecken.

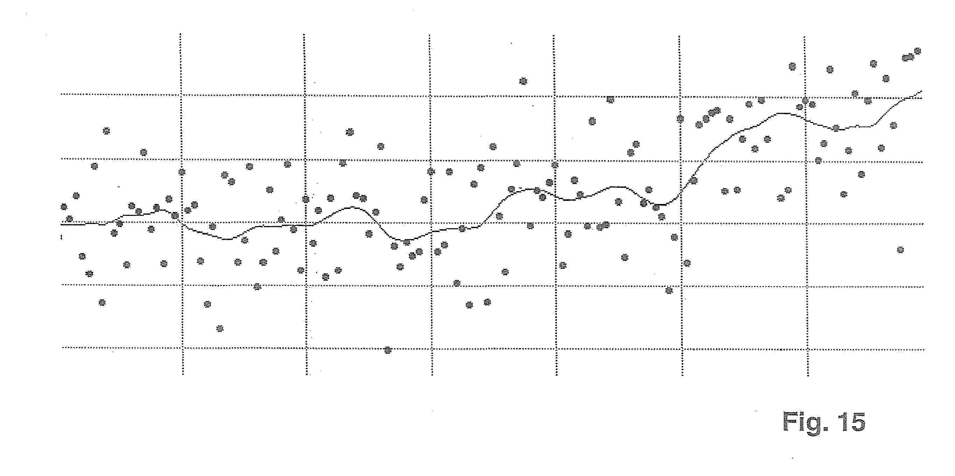

Bei einem weiteren vorteilhaften Ausführungsbeispiel könnte eine Schätzung über n eingestellte Punkte, ein Polynom-Fit und eine anschließende Präzisierung erfolgen. Aus der Mathematik ist bekannt, dass man durch eine Schar von Punkten $P = P (x_i, y_j, z_{ij})$ durch Näherungsverfahren eine Kurve legen kann. Dabei wird das Quadrat des Abstands eines Kurvenpunkts von dem korrespondierenden Messpunkt minimiert. Hierzu zeigt Fig. 15 einen zweidimensionalen Kurven-Fit. Die Linie stellt einen B-Spline-Fit durch die Messpunkte dar.

Es gibt eine Fülle mathematischer Fit-Funktionen. Welche dieser Funktionen den besten Fit darstellt bzw. am besten geeignet ist, sich den Messpunkten anzunähern, ist durch einen Korrelation R messbar. Ist R ~ 1, so ist die Kurve sehr gut angenähert. Ist R « 1, so gibt es eine schlechte Übereinstimmung.

Bei einem dreidimensionalen Näherungsverfahren erfolgt eine Approximation eines Flächenverlaufs in der Weise, dass die Fläche die Oberfläche eines Objekts, vorzugsweise eines Objektträgers, darstellt. Dabei wird eine Schar von Punkten innerhalb einer vorgegebenen Scanfläche gemessen. Da die Scanfläche gekrümmt sein kann, ist eine Ebenengleichung als Berechnungsgrundlage für die Bestimmung aller Oberflächenwerte aus der Messung von einigen Punkten - vorzugsweise drei - nicht geeignet. Allerdings kann man ein Polynom zweiten Grades durch die Messpunkte legen und so eine bessere Approximation der Oberfläche erreichen.

Mit anderen Worten wird die Oberfläche approximativ durch die Messung einiger Punkte und durch einen anschließenden dreidimensionalen Fit mit einer Funktion ermittelt, die eine gekrümmte Oberfläche derart durch die Messpunkte legt, dass das Abstandsquadrat der korrespondierenden Punkte minimal wird.

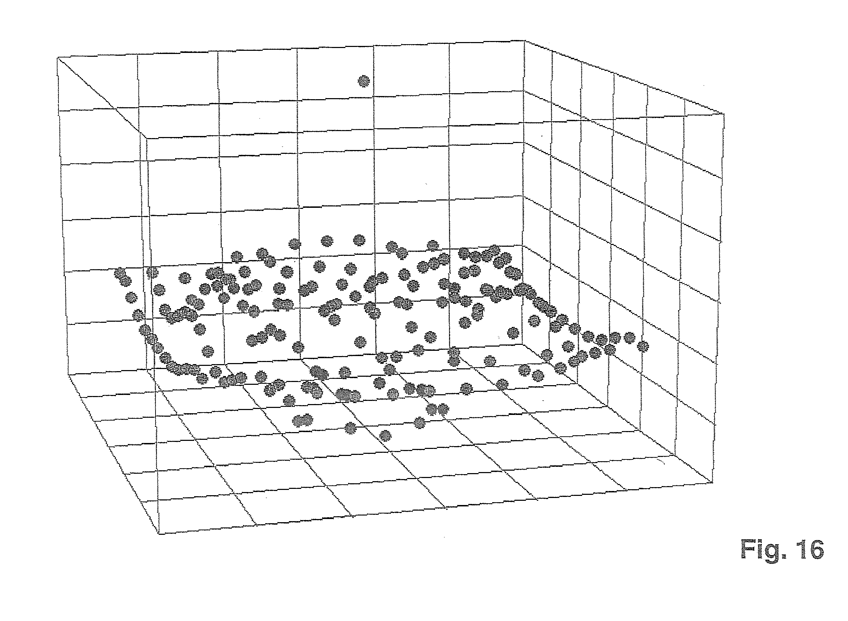

In Fig. 16 ist bspw. eine solche Schar gemessener Punkte dargestellt. Jeder Punkt hat eine x-y-z-Koordinate und liegt auf der Oberfläche des Objektträgers bzw. des Objekts, dessen Oberflächenverlauf abzuschätzen ist.

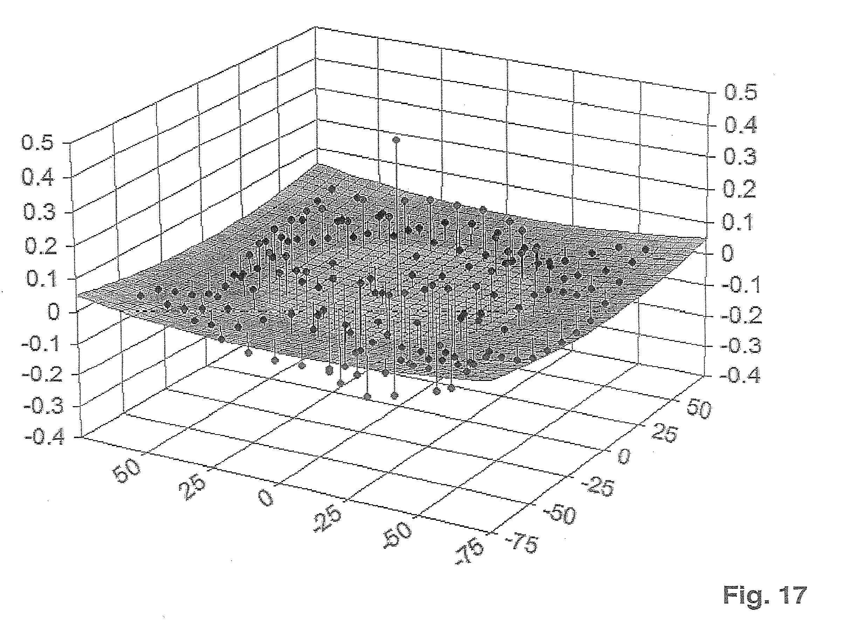

Gemäß Fig. 17 wurde ein Polynom vom Typ $f(x, y) = a + bx^2 + cy^2$ gefittet.

Die gekrümmte Fläche der Funktion, die man zum Fitten genommen hat, ist die neue Schätzebene, also die Ebene, wo Objekte, vorzugsweise Zellen, in etwa liegen. Wie bereits weiter oben beschrieben, schließt sich nun eine Präzisionsmessung an, die die exakte Position des Punkts höchster Information - Z-Ebene - und des optimalen Scanbereichs für jeden einzelnen Punkt der Scanmatrix misst.

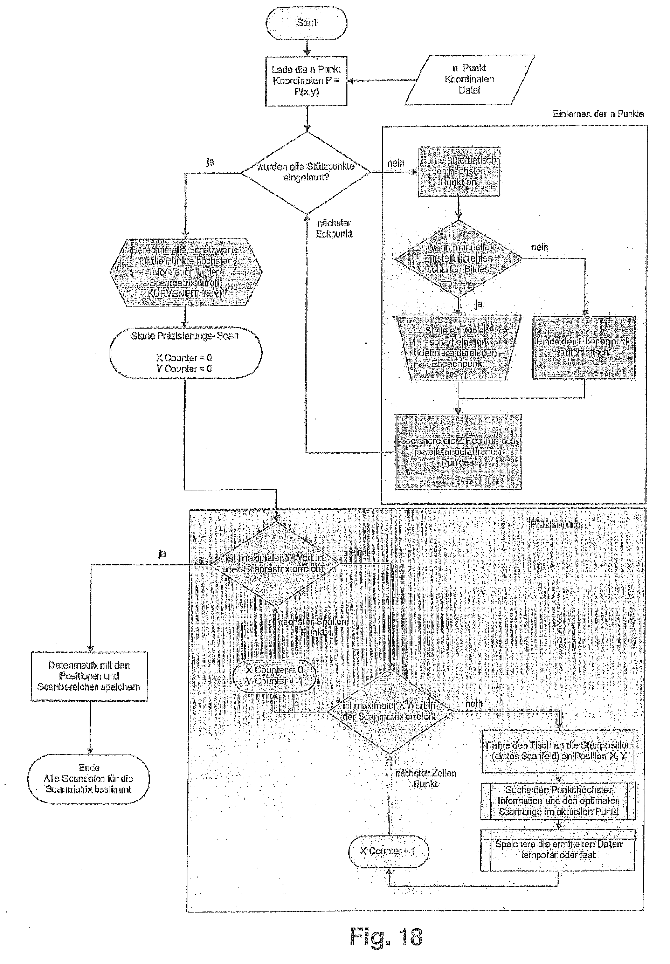

Fig. 18 zeigt ein Flussdiagramm zur Ausführung des zuletzt beschriebenen Ausführungsbeispiels.

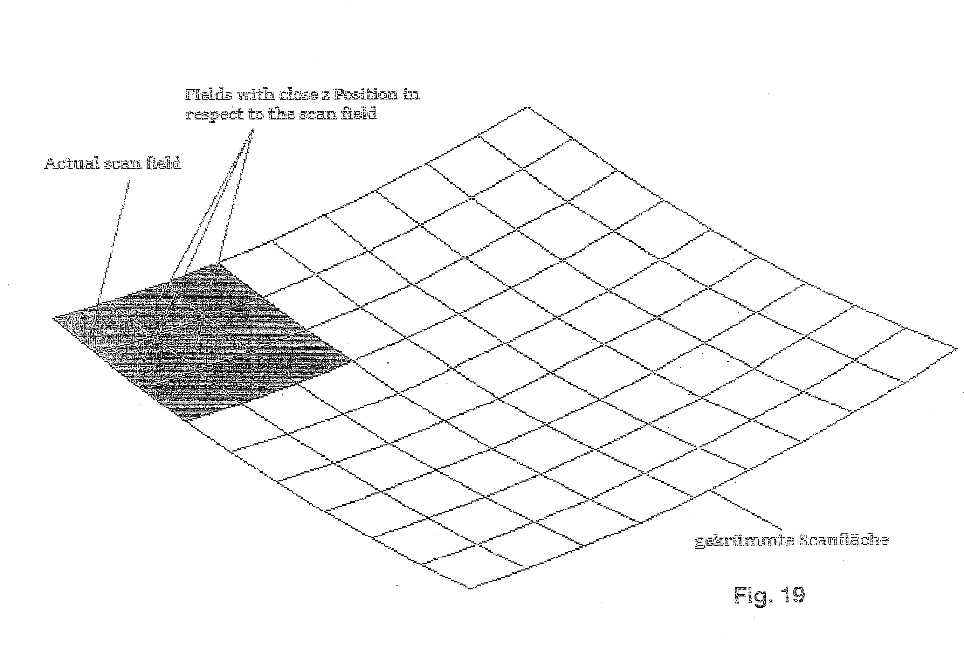

Da eine Oberfläche im Allgemeinen gleichmäßig gekrümmt ist und besonders bei Objektträgern mit keinen starken Sprüngen in dem Oberflächenverlauf innerhalb benachbarter Sanfelder zu rechnen ist, kann man diesen Umstand nutzen, um den Präzisionsscan direkt nach dem ersten Feld zu starten. Hierzu zeigt Fig. 19 Scanfelder, die benachbart in etwa auf der gleichen Z-Position liegen. Kennt man also die genaue Z-Position der Objektträgeroberfläche in einem Scanfeld, so kann man für dessen Nachbarscanfelder eine Vorhersage deren Oberflächenpositionen bezüglich der Z-Richtung machen.

Gemäß Fig. 19 ist das aktuelle Scanfeld das Startfeld, dessen genaue Oberflächenposition in Z-Richtung bekannt ist. Die drei angrenzenden benachbarten Scanfelder müssen daher in etwa dieselbe Oberflächenposition in Z-Richtung haben. Wird also der Objektträgertisch zu nächsten Scanfeld gefahren, um dort nach der Oberflächenposition in Z-Richtung zu suchen, dann "weiß" man bereits, wo in etwa zu suchen ist. Dieser Umstand spart erheblich Zeit und spielt seinen Vorteil voll aus, wenn das Scanfeld sehr groß ist, bspw. 386 Felder aufweist. Der Scan folgt gewissermaßen der Oberfläche, indem er bereits erfasste Scandaten für eine Sprungvorhersage nutzt.

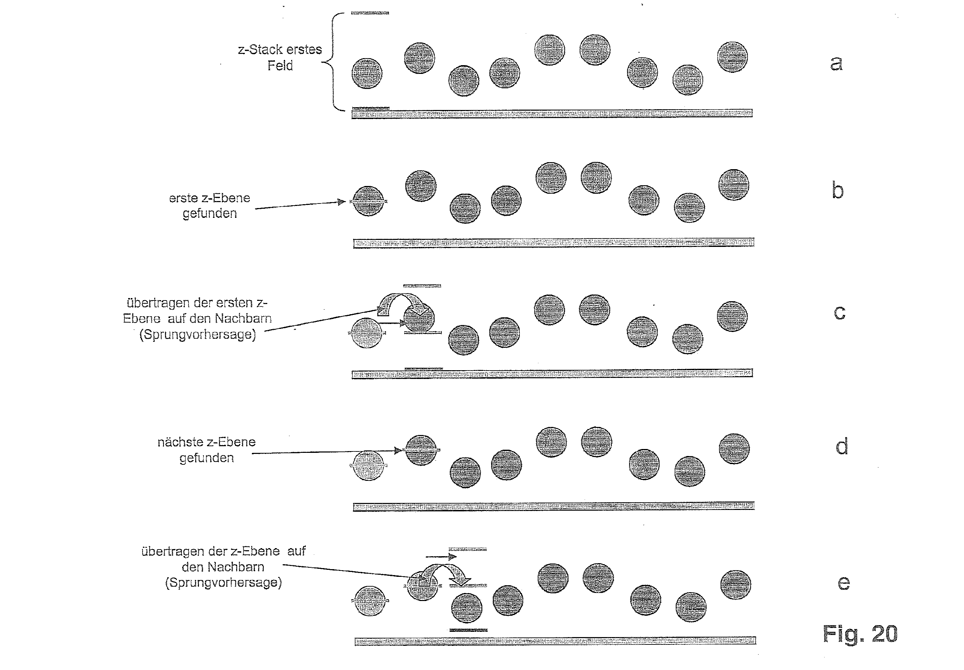

Fig. 20 zeigt gemäß den Bildern a bis e einen Verfahrensablauf, wobei Z-Ebenen höchster Information zu allen Punkten einer Scanmatrix mittels Sprungvorhersage gefunden werden. Bei Bild a wird in einem ersten Schritt das erste Feld über einen großen Bereich abgescannt, um die Ebene höchster Information zu finden.

Sobald diese Ebene höchster Information gefunden ist, wird in einem zweiten Schritte gemäß Bild b diese Ebenenposition für die Verwendung im nächsten Scanfeld abgespeichert.

In einem nächsten Schritt wird gemäß Bild c die Z-Position der Messung des ersten Feldes auf das Nachbarfeld im Sinne einer Sprungvorhersage übertragen. Hierbei wird davon ausgegangen, dass sich die Z-Position höchster Information eines Felds nicht nennenswert ändern, wenn der Tisch zum direkten Nachbarfeld bewegt wird und wenn sich das Nachbarfeld nicht weit entfernt befindet.

Im nächsten Schritt wird gemäß Bild d ein Bereich um diese "vom Nachbarn übertragene" Z-Ebene gescannt, um die Position der Ebene zu finden, in der dieses Feld die höchste Information trägt.

Schließlich wird in einem weiteren Schritt gemäß Bild e die Z-Position der Messung dieses Feldes auf das Nachbarfeld ähnlich wie im Schritt gemäß Bild c beschrieben im Sinne einer Sprungvorhersage übertragen und dann mit diesem Feld wie im Schritt gemäß Bild d beschrieben verfahren.

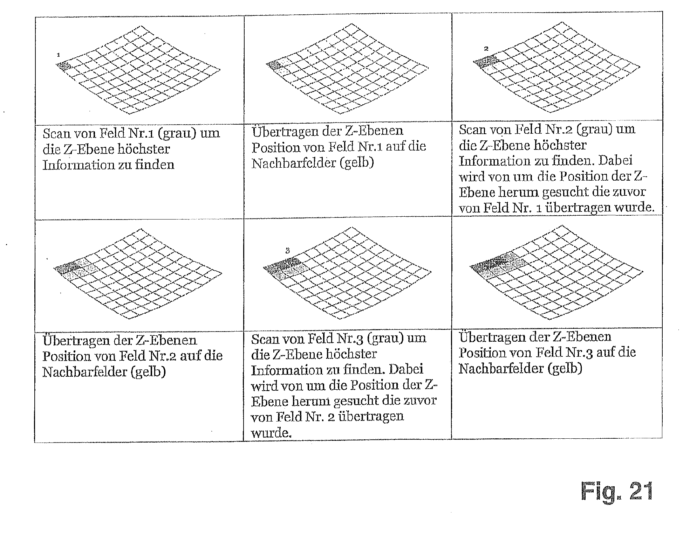

Gemäß Fig. 21 kann jede Sprungvorhersage in Scanrichtung auf je drei Nachbarn angewendet werden. Fig. 21 zeigt hierzu ein entsprechendes Schema, wobei es sich hier um eine Prinzipdarstellung der Sprungvorhersage beim Scan der ersten drei Felder einer Matrix handelt.

Der Vorteil eines Verfahrens per Sprungvorhersage liegt im Wesentlichen in seiner Geschwindigkeit. In diesem Fall kann auf eine Ermittlung eines Schätzwertes mit anschließender Präzisierung der tatsächlichen Position verzichtet werden.

Insbesondere bei zu untersuchenden biologischen Objekten können bei der Beleuchtung fotochemische Reaktionen auftreten, die zu einem Ausbleichen der verwendeten Fluoreszenzfarbstoffe führen können. Ein derartiges Ausbleichen wird auch Bleaching genannt. Das Bleachen führt zu einer Abnahme der Leuchtintensität des Farbstoffs und erfordert daher eine Erhöhung der Laserstrahlintensität, um noch genügend Licht für eine Beobachtung zu erhalten.

Dieser Effekt ist von der verwendeten Wellenlänge abhängig und bei energiereicherer Strahlung - blau, UV - stärker ausgeprägt als bei roten Wellenlängen oder IR-Strahlung, bei denen dieser Effekt schwächer oder gar nicht auftritt.

Zur Vermeidung einer Schädigung einer zu untersuchenden biologischen Zelle durch die Bestrahlung ist es erforderlich, dass sie nur kurz und mit geringer Intensität bestrahlt wird. Um jedoch den Fokus bzw. den Scanbereich und die Ebene mit höchster Information zu finden, muss die biologische Zelle beleuchtet werden. Aber genau diese Beleuchtung kann bereits das Verhalten der Zelle oder des Farbstoffs verändern und somit die Messergebnisse verfälschen.

Zur Beseitigung dieses Problems bzw. zu dessen weitestmöglicher Reduzierung wurde ein Verfahren entwickelt, bei dem zwei verschiedene Wellenlängen verwendet werden. Eine langwellige Laserlinie wird zur Bestimmung der erforderlichen Z-Ebene und des Scanbereichs verwendet und eine kürzere Wellenlänge zur Durchführung der eigentlichen biologischen Aufgabe.

Durch Reduktion der Strahlintensität auf ein Maß mit akzeptablem Signal-Rausch-Verhältnis kann die Belastung der Probe während des Fokus-Scans weiter reduziert werden.

Bei der Analyse einer Zelle bemerkt man eine Vielzahl detekierbarer Merkmale. Diese Merkmale sind gewöhnlich mit Fluoreszenzmarkern färbbar und somit detektierbar.

Die Objekte innerhalb der Zelle sind somit unterschiedlich in Form, Anzahl, Farbe, räumlicher und zeitlicher Verteilung, wobei eine zeitliche Verteilungsänderung bspw. dann auftritt, wenn sich die Zelle teilt. Viele Objekte sind zudem kolokalisiert, d.h. sie befinden sich bspw. immer innerhalb einer Zelle.

Die folgende Tabelle gibt ein Beispiel für unterschiedliche Bestandteile der Zelle und deren mögliche Charakterisierung.

| Objekt | Messbare Merkmale die dieses Objekt auszeichnet |
|---|---|
| Nucleus | • Innerhalb der Zellemembran<br>• Ungefähr in der Zellmitte<br>• Rundlich<br>• Relativ groß<br>• Einmalig wenn nicht gerade Zellteilung |
| Nucleolus | • Innerhalb Nucleus<br>• Ungefähr in Nucleus Mitte<br>• Rundlich<br>• Einmalig wenn nicht gerade Zellteilung |
| Tubulin | • Feine, fadenartige Verästlung<br>• Zentrum nähe Zellkern |
| Lysosome | • Relativ kleine Objekte<br>• Größere Anzahl<br>• Rund<br>• Liegen außerhalb Zellkern und innerhalb Membrane<br>• Können spezifisch gefärbt werden (z.B. gelblich) |
| Cytosol | • Objekte sind größer als Lysosome aber kleiner als Nukleus<br>• Objekte sind elliptisch geformt<br>• Es gibt mehrere<br>• Liegen außerhalb Zellkern und innerhalb Membrane |

Wie in der obigen Tabelle erkennbar, kann man jedem Zellbestandteil einen Merkmalsdatensatz zuordnen, der diesen Objekttyp eindeutig kennzeichnet.

Dadurch wird es möglich, innerhalb eines konfokalen Z-Stapels eine bestimmte Schnittebene zu bestimmen, in der bestimmte Zellmerkmale vorkommen. So kann man bspw. die Ebene mit den meisten Lysosomen oder die Ebene, die den Zellkern ungefähr in der Mitte schneidet, bestimmen. Man kann auch zeitliche Veränderungen in einer Zelle detektieren. Manchmal verändert sich eine Zelle in ihrer Form, kurz bevor sie sich teilt.

Es gelten dann Merkmale wie "außerhalb der Zellteilungsphase ist der Zellkern nahe am Objektträger" oder "in der Zellteilungsphase vergrößert sich die Zelle und der Zellkern hat einen größeren Abstand zum Objektträger".

Bestimmt man die Ebene, die den Zellkern in der Mitte schneidet, zu zwei Zeitpunkten, zum einen, wenn sich die Zelle gerade nicht teilt, und zum anderen dann, wenn sich die Zelle teilt, dann wird die bestimmte Ebene an verschiedenen Z-Positionen liegen. Dieses Verhalten kann man dazu verwenden, um zu erkennen, wann sich eine Zelle beginnt zu teilen, indem man die Z-Position der bestimmten Schnittebenen durch den Zellkern ins Verhältnis setzt. Ist das Verhältnis ungefähr 1, so teilt sich die Zelle nicht. Ist das Verhältnis dagegen ungleich 1, so teilt sie sich.

Als benötigte Hardware zur Durchführung des erfindungsgemäßen Verfahrens könnte eine konfokal arbeitende Mikroskopeinheit und eine präzise arbeitende Z-Verstelleinrichtung eingesetzt werden. Zum Verstellen der Z-Ebene können Piezo-Objektive, Piezo-Tische, Galvo-Tische, normale Z-Triebe von Mikroskopen oder ähnlich arbeitende elektromagnetische Systeme verwendet werden, die geeignet sind, die Z-Position eines Präparates zu verstellen.

Obwohl eine motorbetriebene Justierung für eine vollautomatische Arbeitsweise vorteilhaft ist, kann die Verstelleinheit auch manuell arbeiten. In diesem Fall sinkt möglicherweise die Präzision.

Die Bildaufnahme kann über einen Photomultiplier erfolgen oder eine CCD, die in Verbindung mit bspw. einer strukturierten Beleuchtung oder "Spinning Disc"-Verfahren Bilder in konfokal ähnlicher Weise aufnehmen. Von Bedeutung ist, dass jedes Bild des Bildstapels in Z möglichst wenige unscharfe Bereiche enthält, wie es gewöhnlich in konfokalen Mikroskopen möglich ist.

Ein grundsätzliches Ausführungsbeispiel des erfindungsgemäßen Verfahrens könnte wie folgt vorliegen:

1. Zunächst wir das konfokale System justiert, so dass an der gewünschten Position ein Z-Stapel aufgenommen werden kann. Der Z-Stapel sollte das Objekt oder die Objekte enthalten, auf welche sich das System fokussieren soll.

2. Nun wird längs der Z-Achse eine Bildserie derart aufgenommen, dass eine genügend fein abgestufte Auflösung in Z-Richtung vorliegt. Dann werden die einzelnen Bilder derart gespeichert, dass sie eineindeutig einer Z-Ebene zugeordnet werden können.

3. Anschließend wird manuell oder automatisch ein Bildanalysealgorithmus gewählt, mit welchem die Z-Ebene und der erforderliche Scanbereich bestimmt werden können. Der Bildanalysealgorithmus wird dabei von einem Experten - Mensch oder Maschine - an das jeweilige Problem angepasst.

4. Jedes Bild des Z-Stapels wird durchlaufen und die gesuchten Merkmale bestimmt. Dann werden die Merkmale so verknüpft, dass die gewünschte Z-Ebene - jene mit den meisten Informationen zu den gesuchten Objekten - durch einen Vergleich der gemessenen Merkmalswerte mit vorgegebenen Grenzwerten gefunden werden kann.

5. Dann wird auf ähnliche Weise der Start- und der Endpunkt des Scanbereichs bestimmt, der dadurch charakterisiert ist, dass er das gesuchte Objekt oder die Objekte vollständig erfasst, aber keine zusätzlichen Schnitte scannt, in denen keine Information vorliegt. Der Algorithmus hierfür muss nicht mit dem in 4. verwendeten Algorithmus übereinstimmen.

6. Nun wird geprüft, ob nicht noch nach weiteren Objekten in dem Z-Stapel gesucht werden soll, wobei diese Objekte eine andere Z-Position mit höchster Information haben können und wobei diese Objekte einen anderen Scanbereich aufweisen können.

7. Wenn die Z-Ebenen und Scanbereiche für alle Objekte bestimmt sind, werden die Daten abgespeichert und/oder zur Anwendung gebracht, indem die Mikroskopeinstellungen hinsichtlich der Z-Ebene höchster Information und hinsichtlich des Scanbereichs angepasst werden.

Auf diese Weise kann aus einem umfangreichen Z-Stapel eine kleinere Anzahl von Schnitten ausgeschnitten werden, die immer noch das zu erfassende Objekt vollständig enthalten.

In dem in Fig. 3 gezeigten Beispiel werden im oberen Bereich des Scanstapels zwei Schnitte und im unteren Bereich drei Schnitte verworfen. Rechnet man pro Ebene mit einer Scanzeit von 0,5 Sekunden, so ergeben die fünf eingesparten Ebenen einen Zeitvorteil von 2,5 Sekunden. Im Falle einer Langzeitbeobachtung einer lebenden Zelle wird der Z-Stapel viele Male durchgescannt, möglicherweise 10.000 mal. In diesem Fall beträgt dann die Zeiteinsparung 25.000 Sekunden = 6,94 Stunden. D.h., dass ein Zeitexperiment weniger Zeit benötigt und somit mit höherer Zeitauflösung gescannt werden kann. Zudem wird der Speicherplatz für 25.000 Bilder eingespart. Dies ist ein Vorteil auch für sich anschließende Analysen der Bilder.

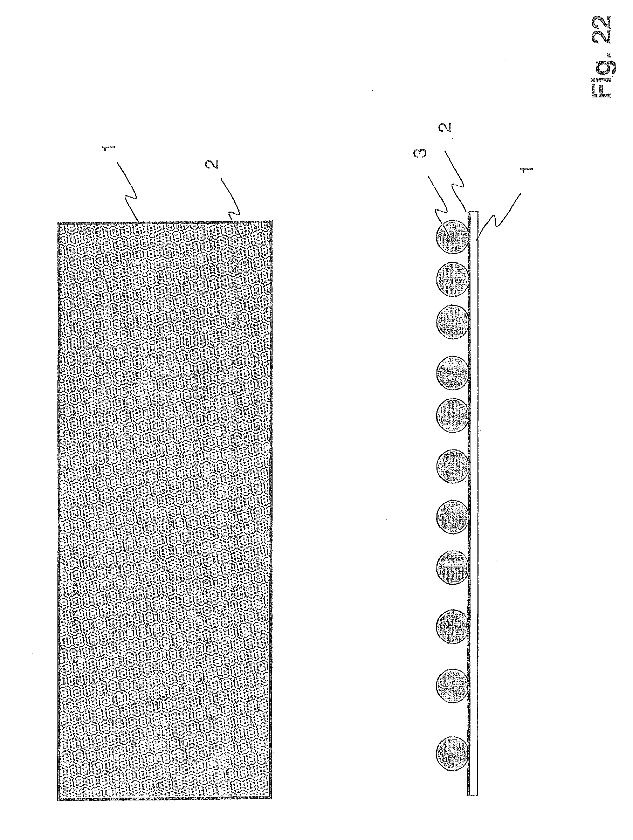

Fig. 22 zeigt einen Objektträger, der auf einer seiner Oberflächen oder in seinem Inneren ein regelmäßiges oder unregelmäßiges Muster aufweist. Das Muster kann farbig oder schwarz-weiß sein. Es kann auch aus fluoreszierenden Punkten bestehen. Bei Fluoreszenz kann insbesondere eine Ausgestaltung des Objektträgers gewählt werden, bei dem das fluoreszierende Muster auf eine bestimmte Wellenlänge reagiert.

Dies hat den Vorteil, dass man die zu mikroskopierenden Fluoreszenzobjekte von dem Fluoreszenzmuster, welches zur Fokussierung verwendet werden soll, optisch trennen kann. Man "sieht" also kein störendes Muster im Experiment-Modus, da dann dessen Musterstruktur nicht zur Fluoreszenz angeregt wird. Durch eine geeignete Ausbildung des Musters ist zudem eine Unterscheidung des Punktemusters von dem eigentlichen Messsignal möglich.

In der Fig. 22 ist ein Objektträger 1 mit einem aufgebrachten Punktemuster 2 zur Fokussierung in Draufsicht gezeigt. Im unteren Bereich der Fig. 22 ist der Objektträger 1 mit dem aufgebrachten Punktemuster 2 in einer Seitenansicht gezeigt. Auf dem Objektträger sind Objekte 3 angeordnet, die untersucht werden sollen. Es handelt sich hier bspw. um Zellen.

Das Punktemuster 2 kann auf einen Objektträger 1 bspw. durch Prägung aufgebracht werden. Es ist jedoch auch eine Bettung oder Projektion des Musters denkbar. Auch dieses Muster kann fokussiert werden.

Das Punktemuster könnte periodisch sein, um per Fourier-Filterung aus dem Bild ausgefiltert zu werden. Alternativ hierzu kann das Punktemuster statistisch vorliegen, damit es per Statistik aus dem Bildsignal gefiltert werden kann. Punktemuster können aus kontrastreichen Farben oder aus Fluoreszenzpunkten bestehen. Derartige Fluoreszenzpunkte können durch eine bestimmte Anregungswellenlänge zum Leuchten gebracht werden und nur dann sichtbar und zur Fokusbestimmung verwendet werden.

Das Fokussierungsverfahren kann anstelle der vorliegenden Zellen ein künstlich aufgebrachtes Punktemuster verwenden.

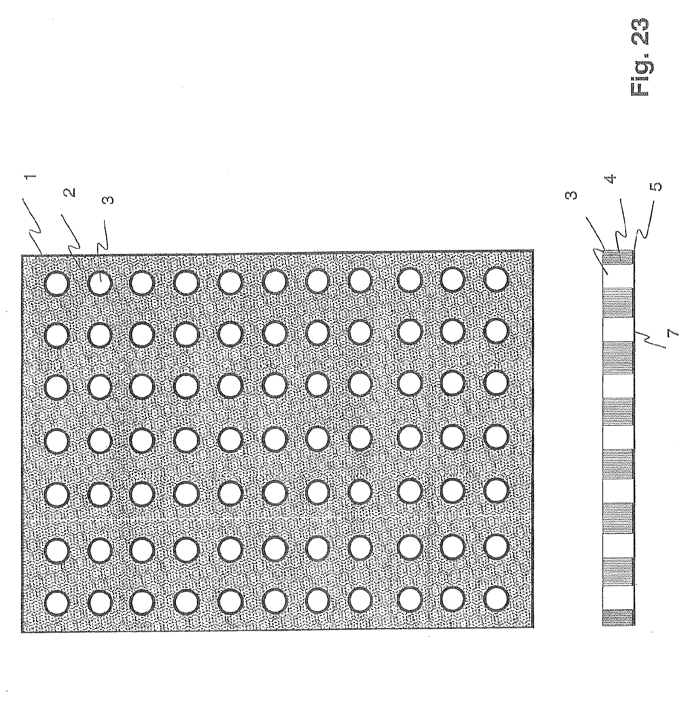

Fig. 23 zeigt eine Mikrotiterplatte 1, die anstelle eines Objektträgers aus Glas oder Kunststoff verwendet werden kann. Dabei weist die Mikrotiterplatte ein Punktemuster zwischen den einzelnen Präparattöpfen auf, wobei die Zwischenräume zwischen den Töpfen der Mikrotiterplatte 1 zum Fokussieren verwendet werden können. Das aufgebrachte Punktemuster ist mit der Bezugsziffer 2 bezeichnet. Die Töpfe der Mlkrotiterplatte sind mit der Bezugsziffer 3 gekennzeichnet. Der untere Teil der Fig. 23 zeigt die Mikrotiterplatte 1 in einer Seitenansicht. Dabei ist der Zwischenraum zwischen den Einzeltöpfen 3 der Mikrotiterplatte 1 mit der Bezugsziffer 4 gekennzeichnet. Der Zwischenraumboden der Mikrotiterplatte 1 mit dem Punktemuster 2 ist mit der Bezugsziffer 5 gekennzeichnet. Die Bezugsziffer 7 zeigt den Boden eines Töpfchens 3 der Mikrotiterplatte 1 ohne Punktemuster. Der Boden der Mikrotiterplatte 1 könnte jedoch ebenfalls ein Punktemuster aufweisen.

Die Mikrotiterplatte 1 weist in den Leerräumen zwischen den einzelnen Töpfchen 3 in ihrem Bodenbereich ein aufgebrachtes Punktemuster zum Zwecke der Fokussierung auf. Die Bodenbereiche der Töpfchen, durch die mikroskopiert wird, können ebenfalls Punktemuster aufweisen, die vorzugsweise auf einer bestimmten Wellenlänge fluoreszieren und auf die somit bei Verwendung einer geeigneten Anregungswellenlänge fokussiert werden kann.

Auch hier liegen die Punktemuster entweder periodisch oder statistisch vor, um in geeigneter Weise ausgefiltert werden zu können.

Abschließend sei angemerkt, dass die voranstehend erörterten Ausführungsbeispiele lediglich der beispielhaften Darstellung der beanspruchten Lehre dienen, diese jedoch nicht auf diese Ausführungsbeispiele einschränken.

**Patentansprüche**

1. Verfahren zur Untersuchung eines Objekts mit einem Mikroskop, insbesondere einem konfokalen Scanmikroskop, mit den folgenden Schritten:

   - Auswählen eines ein zu untersuchendes Objekt oder mehrere zu untersuchende Objekte enthaltenden Scanbereichs in einer vorgebbaren Raumrichtung,
   - Aufnehmen einer Serie von Bildern in dem Scanbereich entlang der Raumrichtung, so dass die einzelnen Bilder einzelnen Ebenen in der Raumrichtung eineindeutig zuordenbar sind,
   - Auswählen eines Bildanalyseverfahrens mit mindestens einem vorgebbaren Kriterium hinsichtlich des zu untersuchenden Objekts oder der zu untersuchenden Objekte und
   - Anwenden des Bildanalyseverfahrens auf die einzelnen Ebenen zur Ermittlung einer das oder die vorgebbaren Kriterien zumindest weitgehend erfüllenden bevorzugten Ebene,

   wobei die Auswahl eines ein zu untersuchendes Objekt oder mehrere zu untersuchende Objekte enthaltenden Scanbereichs in einer vorgebbaren Raumrichtung unter Berücksichtigung der Oberflächenform und/oder -struktur eines Objektträgers erfolgt.

2. Verfahren nach Anspruch 1, **dadurch gekennzeichnet, dass** die Oberfläche des Objektträgers als Ebene angenommen wird und ausgehend von drei bekannten Punkten auf dem Objektträger berechnet wird.

3. Verfahren nach Anspruch 1, **dadurch gekennzeichnet, dass** die Oberfläche des Objektträgers ausgehend von mindestens vier bekannten Punkten triangularisiert wird.

4. Verfahren nach Anspruch 1, **dadurch gekennzeichnet, dass** die Oberfläche des Objektträgers durch n-Ecke oder Vielecke angenähert wird.

5. Verfahren nach Anspruch 1, **dadurch gekennzeichnet, dass** die Oberfläche des Objektträgers ausgehend von n bekannten Punkten durch einen Polynom-Fit angenähert wird.

6. Verfahren nach einem der Ansprüche 2 bis 5, **dadurch gekennzeichnet, dass** die bekannten Punkte manuell oder ausgehend von den Koordinaten bereits ermittelter bevorzugter Ebenen bestimmt werden.

7. Verfahren nach einem der Ansprüche 1 bis 6, **dadurch gekennzeichnet, dass** die Oberfläche des Objektträgers in mehrere Scanfelder aufgeteilt wird und dass nach Bestimmung der Position eines ersten Scanfelds bei der Bestimmung der Position eines benachbarten Scanfelds die Position des ersten Scanfelds berücksichtigt wird.

8. Verfahren nach einem der Ansprüche 1 bis 7, **dadurch gekennzeichnet, dass** auf den Objektträger auf eine seiner Oberflächen oder in das Innere des Objektträgers ein regelmäßiges oder unregelmäßiges Muster auf- oder eingebracht wird, vorzugsweise ist das Muster schwarz-weiß oder farbig und/oder weist fluoreszierende Punkte oder Bereiche auf.

9. Verfahren nach Anspruch 8, **dadurch gekennzeichnet, dass** die fluoreszierenden Punkte oder Bereiche auf eine vorgebbare Wellenlänge reagieren.

10. Verfahren nach Anspruch 8 oder 9, **dadurch gekennzeichnet, dass** ein fluoreszierendes zu untersuchendes Objekt von den fluoreszierenden Punkten oder Bereichen optisch getrennt wird.

11. Verfahren nach einem der Ansprüche 8 bis 10, **dadurch gekennzeichnet, dass** das Muster zur Berechnung, Triangularisierung oder Annäherung der Oberfläche des Objektträgers verwendet wird.

12. Verfahren nach einem der Ansprüche 8 bis 11, **dadurch gekennzeichnet, dass** das Muster auf einen im Wesentlichen ebenen Objektträger aufgebracht wird.

13. Verfahren nach einem der Ansprüche 8 bis 11, **dadurch gekennzeichnet, dass** das Muster auf eine Mikrotiterplatte aufgebracht wird.

14. Verfahren nach Anspruch 13 **dadurch gekennzeichnet, dass** das Muster zwischen den Töpfen und/oder in den Töpfen einer Mikrotiterplatte aufgebracht wird.

15. Mikroskop zur Durchführung des Verfahrens nach einem der Ansprüche 1 bis 14.

Fig. 1

Fig. 2

Fig. 3

Startbereich für Z-Scan

Durch AAF optimierter Scanbereich

Z-Stack

Stoppbereich für Z-Scan

Ebene mit größtem Informationsgehalt

Start — Fahre das System an eine bestimmte z Position (Verwendung Piezo Tisch, Piezo Objektiv, Tisch, Galvo etc.)

Aufnahme eines Bildstapels durch Verstellung des konfokalen Aufnahmeposition und speichern der Einzelbilder (RAM, Festplatte, LAN, WEB, etc.)

Auswahl eines Bildanalyse Algorithmus zur Bestimmung der besten Bildebene (n)

Wähle Verfahren für Objekttyp i (von n verschiedenen Verfahren)

Bestimmen der besten Bildebene für Objekttyp i

Rücklieferung der Z Position des besten Bildes

Bestimmen des besten Scan Ranges für Objekttyp i

Rücklieferung des besten Scanranges

Alle Bildebenen bestimmt ? Wenn nein dann analysiere nächsten Objekttyp

nein

ja

Überschreibe die Mikroskopparameter (beste Z-Ebene; Scanrange) mit den neuen Daten oder speichere sie für eine spätere Verwendung

Fig. 4

21

Fig. 5

Objekte die es zu scannen gilt

Fläche die es zu
scannen gilt

## Vorher: Schätzung

Vorgegebener
Scanbereich und
vorgegebene
Positionen
höchster
Information

Objekte befinden sich
auf unterschiedlichen
Z Positionen

## Nachher: Präzisierung

Nach dem adaptiven
Autofokus sind sowohl
die Scanbereiche als
auch die Positionen
höchster Information
optimiert

Fig. 6

schiefe
Scanebene
im Raum

Z-Stack 1

Z-Stack 2

Z-Stack 3

Fig. 7

EP 2 381 287 A1

Fig. 8

25

schiefe
Scanebene
im Raum

Z-Stack 1

Z-Stack 2

Z-Stack 3

## Vorher: Schätzung

Vorgegebener
Scanbereich und
vorgegebene
Positionen
höchster
Information

Objekte befinden sich
auf unterschiedlichen
Z Positionen

## Nachher: Präzisierung

Berechnete
schiefe Ebene

Nach dem adaptiven
Autofokus sind sowohl
die Scanbereiche als
auch die Positionen
höchster Information
optimiert

**Fig. 9**

Fig. 10

Fig. 11

gekrümmte
Scanebene im
Raum

Z-Stack 1

Z-Stack 2

Z-Stack 4

Z-Stack 3

Triangularisierung der Ebene in
zwei Dreiecke

Fig. 12

Fig. 13

Fig. 14

Fig. 15

Fig. 16

Fig. 17

Fig. 18

Fields with close z Position in respect to the scan field

Actual scan field

gekrümmte Scanfläche

Fig. 19

z-Stack erstes
Feld

a

erste z-Ebene
gefunden

b

übertragen der ersten z-
Ebene auf den Nachbarn
(Sprungvorhersage)

c

nächste z-Ebene
gefunden

d

übertragen der z-Ebene auf
den Nachbarn
(Sprungvorhersage)

e

Fig. 20

| | | |
|---|---|---|
| Scan von Feld Nr.1 (grau) um die Z-Ebene höchster Information zu finden | Übertragen der Z-Ebenen Position von Feld Nr.1 auf die Nachbarfelder (gelb) | Scan von Feld Nr.2 (grau) um die Z-Ebene höchster Information zu finden. Dabei wird von um die Position der Z-Ebene herum gesucht die zuvor von Feld Nr. 1 übertragen wurde. |
| Übertragen der Z-Ebenen Position von Feld Nr.2 auf die Nachbarfelder (gelb) | Scan von Feld Nr.3 (grau) um die Z-Ebene höchster Information zu finden. Dabei wird von um die Position der Z-Ebene herum gesucht die zuvor von Feld Nr. 2 übertragen wurde. | Übertragen der Z-Ebenen Position von Feld Nr.3 auf die Nachbarfelder (gelb) |

Fig. 21

Fig. 22

Fig. 23

| | Europäisches Patentamt European Patent Office Office européen des brevets | **EUROPÄISCHER RECHERCHENBERICHT** | **Nummer der Anmeldung** EP 11 17 3796 |
|---|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2006/024967 A1 (3D HISTECH KFT [HU]; VIRAG TIBOR [HU]; LASZLO ATTILA [HU]; MOLNAR BELA) 9. März 2006 (2006-03-09) * Zusammenfassung * * Ansprüche 1-5 * ----- | 1,6,7,15 | INV. G02B21/36 G01N1/31 G02B21/24 G02B21/00 |
| X | US 2004/150217 A1 (HEFFELFINGER DAVID M [US] ET AL) 5. August 2004 (2004-08-05) * Zusammenfassung * * Absatz [0017] * ----- | 1,8-14 | |
| X | WO 03/012518 A (INTERSCOPE TECHNOLOGIES INC [US]) 13. Februar 2003 (2003-02-13) * Abbildungen * * Seite 8, Zeile 12 - Seite 19, Zeile 3 * ----- | 1-7,15 | |
| X | US 2006/007345 A1 (OLSON ALLEN [US] ET AL) 12. Januar 2006 (2006-01-12) * Zusammenfassung * * Abbildungen 1-3 * * Absatz [0027] - Absatz [0040] * ----- | 1-7 | |
| | | | RECHERCHIERTE SACHGEBIETE (IPC) |
| A | US 2006/171582 A1 (EICHHORN OLE [US]) 3. August 2006 (2006-08-03) * Zusammenfassung * * Abbildungen * * Absatz [0029] - Absatz [0050] * ----- | 1-15 | G02B |
| A | US 2005/280818 A1 (YAMASHITA YUSUKE [JP] ET AL) 22. Dezember 2005 (2005-12-22) * Abbildungen * ----- | 1-15 | |
| A | DE 102 35 656 A1 (LEICA MICROSYSTEMS [DE]) 19. Februar 2004 (2004-02-19) * das ganze Dokument * ----- | 1-15 | |
| | -/-- | | |

Der vorliegende Recherchenbericht wurde für alle Patentansprüche erstellt

| Recherchenort München | Abschlußdatum der Recherche 14. September 2011 | Prüfer Windecker, Robert |
|---|---|---|

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...........................................................................................

& : Mitglied der gleichen Patentfamilie, übereinstimmendes Dokument

EPO FORM 1503 03.82 (P04C03)

Europäisches
Patentamt

European
Patent Office

Office européen
des brevets

**EUROPÄISCHER RECHERCHENBERICHT**

Nummer der Anmeldung

EP 11 17 3796

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2006/007533 A1 (EICHHORN OLE [US] ET AL) 12. Januar 2006 (2006-01-12) <br> * Abbildungen 2-8 * <br> * Absatz [0026] - Absatz [0050] * <br> ----- | 1-15 | |
| A | DE 101 49 357 A1 (LEICA MICROSYSTEMS IMAGING SOL [GB]) 18. April 2002 (2002-04-18) <br> * Zusammenfassung * <br> * Abbildungen * <br> * Absatz [0021] - Absatz [0040] * <br> ----- | 1-15 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 14. September 2011 | Windecker, Robert |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

........................................................................

& : Mitglied der gleichen Patentfamilie, übereinstimmendes
    Dokument

EPO FORM 1503 03.82 (P04C03)

EP 2 381 287 A1

**ANHANG ZUM EUROPÄISCHEN RECHERCHENBERICHT
ÜBER DIE EUROPÄISCHE PATENTANMELDUNG NR.**

EP 11 17 3796

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-09-2011

| Im Recherchenbericht angeführtes Patentdokument | Datum der Veröffentlichung | Mitglied(er) der Patentfamilie | | Datum der Veröffentlichung |
|---|---|---|---|---|
| WO 2006024967 A1 | 09-03-2006 | AT<br>DK<br>EP<br>HK<br>US | 441128 T<br>1789831 T3<br>1789831 A1<br>1107408 A1<br>2008099661 A1 | 15-09-2009<br>21-12-2009<br>30-05-2007<br>09-04-2010<br>01-05-2008 |
| US 2004150217 A1 | 05-08-2004 | KEINE | | |
| WO 03012518 A | 13-02-2003 | AU | 2002322842 A1 | 17-02-2003 |
| US 2006007345 A1 | 12-01-2006 | US | 2010141753 A1 | 10-06-2010 |
| US 2006171582 A1 | 03-08-2006 | US | 2010321387 A1 | 23-12-2010 |
| US 2005280818 A1 | 22-12-2005 | KEINE | | |
| DE 10235656 A1 | 19-02-2004 | US | 2004109169 A1 | 10-06-2004 |
| US 2006007533 A1 | 12-01-2006 | US<br>US<br>US | 2009116733 A1<br>2010177166 A1<br>2011090223 A1 | 07-05-2009<br>15-07-2010<br>21-04-2011 |
| DE 10149357 A1 | 18-04-2002 | KEINE | | |

EPO FORM P0461

Für nähere Einzelheiten zu diesem Anhang : siehe Amtsblatt des Europäischen Patentamts, Nr.12/82